# EUROPEAN PATENT APPLICATION

(11) **EP 4 730 853 A2**
(43) Date of publication of application: **22.04.2026**
(21) Application number: 26162967.9
(22) Date of filing: 01.04.2022
(51) Int. Cl.: H04W 12/75

(54) **ASSOCIATING DEVICES WITH ACCESS POINTS USING CREDENTIALS**

(30) Priority: 29.04.2021 US 202163201448 P; 31.03.2022 US 202217657566
(62) Divisional of application: 22720266.0
(71) Applicant: QUALCOMM Incorporated, San Diego, CA 92121-1714 (US)
(72) Inventor: PATIL, Abhishek Pramod, San Diego, CA, 92121-1714 (US); CHERIAN, George, San Diego, CA, 92121-1714 (US); LEE, Soo Bum, San Diego, CA, 92121-1714 (US); MALINEN, Jouni Kalevi, San Diego, CA, 92121-1714 (US); DE VEGT, Rolf, San Diego, CA, 92121-1714 (US)
(74) Representative: Bardehle Pagenberg Partnerschaft mbB Patentanwälte Rechtsanwälte

(57) **Abstract**

An apparatus of a device (900) for wireless communication is described, the apparatus comprising: means for transmitting, via a broadcast, a first frame that indicates one or more of a device credential or a first payload; means for receiving, from an access point (1000), a second frame that indicates one or more of a second payload or an access point credential; means for associating with the access point (1000) based at least in part on the access point credential; and means for performing a communication, to a cloud computing system (1100) via the access point (1000), after the device (900) has been associated with the access point (1000). Further, a corresponding apparatus at an access point and an apparatus at a cloud computing system are described.

## Description

### CROSS-REFERENCE TO RELATED APPLICATIONS

This Patent Application claims priority to U.S. Provisional Patent Application No. 63/201,448, filed on April 29, 2021, entitled "ASSOCIATING DEVICES WITH ACCESS POINTS USING CREDENTIALS," and U.S. Nonprovisional Patent Application No. 17/657,566, filed on March 31, 2022, entitled "ASSOCIATING DEVICES WITH ACCESS POINTS USING CREDENTIALS".

### FIELD OF THE DISCLOSURE

Aspects of the present disclosure generally relate to wireless communication and to techniques and apparatuses for associating devices with access points using credentials.

### BACKGROUND

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power, or the like). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP).

A wireless network may include one or more base stations that support communication for a user equipment (UE) or multiple UEs. A UE may communicate with a base station via downlink communications and uplink communications. "Downlink" (or "DL") refers to a communication link from the base station to the UE, and "uplink" (or "UL") refers to a communication link from the UE to the base station.

The above multiple access technologies have been adopted in various telecommunication standards to provide a common protocol that enables different UEs to communicate on a municipal, national, regional, and/or global level. New Radio (NR), which may be referred to as 5G, is a set of enhancements to the LTE mobile standard promulgated by the 3GPP. NR is designed to better support mobile broadband internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink, using CP-OFDM and/or single-carrier frequency division multiplexing (SC-FDM) (also known as discrete Fourier transform spread OFDM (DFT-s-OFDM)) on the uplink, as well as supporting beamforming, multiple-input multiple-output (MIMO) antenna technology, and carrier aggregation. As the demand for mobile broadband access continues to increase, further improvements in LTE, NR, and other radio access technologies remain useful.

### SUMMARY

The invention is defined by the independent claims. Preferred embodiments are set out in the dependent claims. In some aspects, a method of wireless communication performed by device includes transmitting, via a broadcast, a first frame that indicates one or more of a device credential or a payload; receiving, from the access point, a second frame that indicates one or more of the payload or an access point credential; associating with the access point based at least in part on the access point credential; and performing a communication, to a cloud computing system via the access point, after the device has been associated with the access point.

In some aspects, a method of wireless communication performed by an access point includes receiving, from a device via a broadcast, a first frame that indicates a device credential and a payload; relaying, to a cloud computing system, the payload with an access point credential; receiving, from the cloud computing system, the payload and the access point credential based at least in part on a validation of the payload and the access point credential; and associating with the device based at least in part on the access point credential to enable communications between the device and the cloud computing system via the access point.

In some aspects, a method of wireless communication performed by a cloud computing system includes receiving, from an access point, an indication of a payload associated with a device and an access point credential; validating the payload and the access point credential, as indicated in the indication; transmitting, to the access point, the payload and the access point credential based at least in part on the validation of the payload and the access point credential; and communicating with the device via the access point based at least in part on an association between the device and the access point, wherein the association is based at least in part on the access point credential.

In some aspects, a device for wireless communication includes a memory and one or more processors, coupled to the memory, configured to: transmit, via a broadcast, a first frame that indicates one or more of a device credential or a payload; receive, from the access point, a second frame that indicates one or more of the payload or an access point credential; associate with the access point based at least in part on the access point credential; and perform a communication, to a cloud computing system via the access point, after the device has been associated with the access point.

In some aspects, an access point for wireless communication includes a memory and one or more processors, coupled to the memory, configured to: receive, from a device via a broadcast, a first frame that indicates a device credential and a payload; relay, to a cloud computing system, the payload with an access point credential; receive, from the cloud computing system, the payload and the access point credential based at least in part on a validation of the payload and the access point credential; and associate with the device based at least in part on the access point credential to enable communications between the device and the cloud computing system via the access point.

In some aspects, a cloud computing system for wireless communication includes a memory and one or more processors, coupled to the memory, configured to: receive, from an access point, an indication of a payload associated with a device and an access point credential; validate the payload and the access point credential, as indicated in the indication; transmit, to the access point, the payload and the access point credential based at least in part on the validation of the payload and the access point credential; and communicate with the device via the access point based at least in part on an association between the device and the access point, wherein the association is based at least in part on the access point credential.

In some aspects, a non-transitory computer-readable medium storing a set of instructions for wireless communication includes one or more instructions that, when executed by one or more processors of a device, cause the device to: transmit, via a broadcast, a first frame that indicates one or more of a device credential or a payload; receive, from the access point, a second frame that indicates one or more of the payload or an access point credential; associate with the access point based at least in part on the access point credential; and perform a communication, to a cloud computing system via the access point, after the device has been associated with the access point.

In some aspects, a non-transitory computer-readable medium storing a set of instructions for wireless communication includes one or more instructions that, when executed by one or more processors of an access point, cause the access point to: receive, from a device via a broadcast, a first frame that indicates a device credential and a payload; relay, to a cloud computing system, the payload with an access point credential; receive, from the cloud computing system, the payload and the access point credential based at least in part on a validation of the payload and the access point credential; and associate with the device based at least in part on the access point credential to enable communications between the device and the cloud computing system via the access point.

In some aspects, a non-transitory computer-readable medium storing a set of instructions for wireless communication includes one or more instructions that, when executed by one or more processors of a cloud computing system, cause the cloud computing system to: receive, from an access point, an indication of a payload associated with a device and an access point credential; validate the payload and the access point credential, as indicated in the indication; transmit, to the access point, the payload and the access point credential based at least in part on the validation of the payload and the access point credential; and communicate with the device via the access point based at least in part on an association between the device and the access point, wherein the association is based at least in part on the access point credential.

In some aspects, an apparatus for wireless communication includes means for transmitting, via a broadcast, a first frame that indicates one or more of an apparatus credential or a payload; means for receiving, from the access point, a second frame that indicates one or more of the payload or an access point credential; means for associating with the access point based at least in part on the access point credential; and means for performing a communication, to a cloud computing system via the access point, after the apparatus has been associated with the access point.

In some aspects, an apparatus for wireless communication includes means for receiving, from a device via a broadcast, a first frame that indicates a device credential and a payload; means for relaying, to a cloud computing system, the payload with an apparatus credential; means for receiving, from the cloud computing system, the payload and the apparatus credential based at least in part on a validation of the payload and the apparatus credential; and means for associating with the device based at least in part on the apparatus credential to enable communications between the device and the cloud computing system via the apparatus.

In some aspects, an apparatus for wireless communication includes means for receiving, from an access point, an indication of a payload associated with a device and an access point credential; means for validating the payload and the access point credential, as indicated in the indication; means for transmitting, to the access point, the payload and the access point credential based at least in part on the validation of the payload and the access point credential; and means for communicating with the device via the access point based at least in part on an association between the device and the access point, wherein the association is based at least in part on the access point credential.

Aspects generally include a method, apparatus, system, computer program product, non-transitory computer-readable medium, user equipment, base station, wireless communication device, and/or processing system as substantially described herein with reference to and as illustrated by the drawings and specification.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Such equivalent constructions do not depart from the scope of the appended claims. Characteristics of the concepts disclosed herein, both their organization and method of operation, together with associated advantages, will be better understood from the following description when considered in connection with the accompanying figures. Each of the figures is provided for the purposes of illustration and description, and not as a definition of the limits of the claims.

While aspects are described in the present disclosure by illustration to some examples, those skilled in the art will understand that such aspects may be implemented in many different arrangements and scenarios. Techniques described herein may be implemented using different platform types, devices, systems, shapes, sizes, and/or packaging arrangements. For example, some aspects may be implemented via integrated chip embodiments or other non-module-component based devices (e.g., end-user devices, vehicles, communication devices, computing devices, industrial equipment, retail/purchasing devices, medical devices, and/or artificial intelligence devices). Aspects may be implemented in chip-level components, modular components, non-modular components, non-chip-level components, device-level components, and/or system-level components. Devices incorporating described aspects and features may include additional components and features for implementation and practice of claimed and described aspects. For example, transmission and reception of wireless signals may include one or more components for analog and digital purposes (e.g., hardware components including antennas, radio frequency (RF) chains, power amplifiers, modulators, buffers, processors, interleavers, adders, and/or summers). It is intended that aspects described herein may be practiced in a wide variety of devices, components, systems, distributed arrangements, and/or end-user devices of varying size, shape, and constitution.

### BRIEF DESCRIPTION OF THE DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.
Fig. 1 is a diagram illustrating an example of a wireless network, in accordance with the present disclosure.
Fig. 2 is a diagram illustrating an example of a base station in communication with a user equipment (UE) in a wireless network, in accordance with the present disclosure.
Fig. 3 is a diagram illustrating an example of an uplink broadcast feature, in accordance with the present disclosure.
Figs. 4 and 5A are diagrams illustrating examples associated with associating devices with access points using credentials, in accordance with the present disclosure.
Fig. 5B is a diagram illustrating an example associated with relaying using an access point collocated with a proxy, in accordance with the present disclosure.
Fig. 5C is a diagram illustrating an example associated with relaying using an access point that is not collocated with a proxy, in accordance with the present disclosure.
Figs. 6-8 are diagrams illustrating example processes associated with associating devices with access points using credentials, in accordance with the present disclosure.
Figs. 9-11 are block diagrams of example apparatuses for wireless communication, in accordance with the present disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. One skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Several aspects of telecommunication systems will now be presented with reference to various apparatuses and techniques. These apparatuses and techniques will be described in the following detailed description and illustrated in the accompanying drawings by various blocks, modules, components, circuits, steps, processes, algorithms, or the like (collectively referred to as "elements"). These elements may be implemented using hardware, software, or combinations thereof. Whether such elements are implemented as hardware or software depends upon the particular application and design constraints imposed on the overall system.

While aspects may be described herein using terminology commonly associated with a 5G or New Radio (NR) radio access technology (RAT), aspects of the present disclosure can be applied to other RATs, such as a 3G RAT, a 4G RAT, and/or a RAT subsequent to 5G (e.g., 6G).

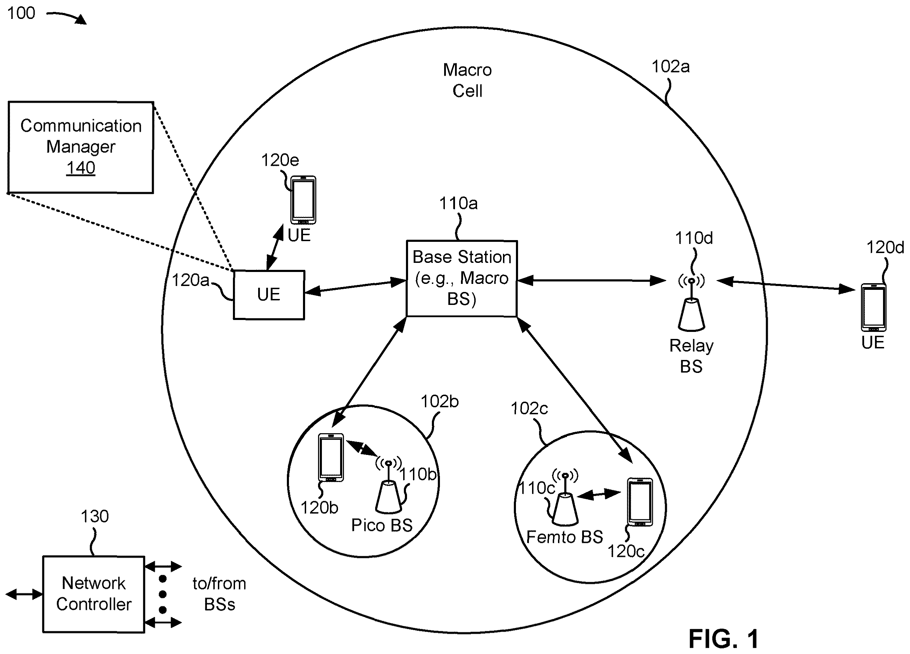

Fig. 1 is a diagram illustrating an example of a wireless network 100, in accordance with the present disclosure. The wireless network 100 may be or may include elements of a 5G (e.g., NR) network and/or a 4G (e.g., Long Term Evolution (LTE)) network, among other examples. The wireless network 100 may include one or more base stations 110 (shown as a BS 110a, a BS 110b, a BS 110c, and a BS 110d), a user equipment (UE) 120 or multiple UEs 120 (shown as a UE 120a, a UE 120b, a UE 120c, a UE 120d, and a UE 120e), and/or other network entities. A base station 110 is an entity that communicates with UEs 120. A base station 110 (sometimes referred to as a BS) may include, for example, an NR base station, an LTE base station, a Node B, an eNB (e.g., in 4G), a gNB (e.g., in 5G), an access point, and/or a transmission reception point (TRP). Each base station 110 may provide communication coverage for a particular geographic area. In the Third Generation Partnership Project (3GPP), the term "cell" can refer to a coverage area of a base station 110 and/or a base station subsystem serving this coverage area, depending on the context in which the term is used.

A base station 110 may provide communication coverage for a macro cell, a pico cell, a femto cell, and/or another type of cell. A macro cell may cover a relatively large geographic area (e.g., several kilometers in radius) and may allow unrestricted access by UEs 120 with service subscriptions. A pico cell may cover a relatively small geographic area and may allow unrestricted access by UEs 120 with service subscription. A femto cell may cover a relatively small geographic area (e.g., a home) and may allow restricted access by UEs 120 having association with the femto cell (e.g., UEs 120 in a closed subscriber group (CSG)). A base station 110 for a macro cell may be referred to as a macro base station. A base station 110 for a pico cell may be referred to as a pico base station. A base station 110 for a femto cell may be referred to as a femto base station or an in-home base station. In the example shown in Fig. 1, the BS 110a may be a macro base station for a macro cell 102a, the BS 110b may be a pico base station for a pico cell 102b, and the BS 110c may be a femto base station for a femto cell 102c. A base station may support one or multiple (e.g., three) cells.

In some aspects, the term "base station" (e.g., the base station 110) or "network entity" may refer to an aggregated base station, a disaggregated base station, an integrated access and backhaul (IAB) node, a relay node, and/or one or more components thereof. For example, in some aspects, "base station" or "network entity" may refer to a central unit (CU), a distributed unit (DU), a radio unit (RU), a Near-Real Time (Near-RT) RAN Intelligent Controller (RIC), or a Non-Real Time (Non-RT) RIC, or a combination thereof. In some aspects, the term "base station" or "network entity" may refer to one device configured to perform one or more functions, such as those described herein in connection with the base station 110. In some aspects, the term "base station" or "network entity" may refer to a plurality of devices configured to perform the one or more functions. For example, in some distributed systems, each of a number of different devices (which may be located in the same geographic location or in different geographic locations) may be configured to perform at least a portion of a function, or to duplicate performance of at least a portion of the function, and the term "base station" or "network entity" may refer to any one or more of those different devices. In some aspects, the term "base station" or "network entity" may refer to one or more virtual base stations and/or one or more virtual base station functions. For example, in some aspects, two or more base station functions may be instantiated on a single device. In some aspects, the term "base station" or "network entity" may refer to one of the base station functions and not another. In this way, a single device may include more than one base station.

In some examples, a cell may not necessarily be stationary, and the geographic area of the cell may move according to the location of a base station 110 that is mobile (e.g., a mobile base station). In some examples, the base stations 110 may be interconnected to one another and/or to one or more other base stations 110 or network nodes (not shown) in the wireless network 100 through various types of backhaul interfaces, such as a direct physical connection or a virtual network, using any suitable transport network.

The wireless network 100 may include one or more relay stations. A relay station is an entity that can receive a transmission of data from an upstream station (e.g., a base station 110 or a UE 120) and send a transmission of the data to a downstream station (e.g., a UE 120 or a base station 110). A relay station may be a UE 120 that can relay transmissions for other UEs 120. In the example shown in Fig. 1, the BS 110d (e.g., a relay base station) may communicate with the BS 110a (e.g., a macro base station) and the UE 120d in order to facilitate communication between the BS 110a and the UE 120d. A base station 110 that relays communications may be referred to as a relay station, a relay base station, a relay, or the like.

The wireless network 100 may be a heterogeneous network that includes base stations 110 of different types, such as macro base stations, pico base stations, femto base stations, relay base stations, or the like. These different types of base stations 110 may have different transmit power levels, different coverage areas, and/or different impacts on interference in the wireless network 100. For example, macro base stations may have a high transmit power level (e.g., 5 to 40 watts) whereas pico base stations, femto base stations, and relay base stations may have lower transmit power levels (e.g., 0.1 to 2 watts).

A network controller 130 may couple to or communicate with a set of base stations 110 and may provide coordination and control for these base stations 110. The network controller 130 may communicate with the base stations 110 via a backhaul communication link. The base stations 110 may communicate with one another directly or indirectly via a wireless or wireline backhaul communication link.

The UEs 120 may be dispersed throughout the wireless network 100, and each UE 120 may be stationary or mobile. A UE 120 may include, for example, an access terminal, a terminal, a mobile station, and/or a subscriber unit. A UE 120 may be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device, a biometric device, a wearable device (e.g., a smart watch, smart clothing, smart glasses, a smart wristband, smart jewelry (e.g., a smart ring or a smart bracelet)), an entertainment device (e.g., a music device, a video device, and/or a satellite radio), a vehicular component or sensor, a smart meter/sensor, industrial manufacturing equipment, a global positioning system device, and/or any other suitable device that is configured to communicate via a wireless medium.

Some UEs 120 may be considered machine-type communication (MTC) or evolved or enhanced machine-type communication (eMTC) UEs. An MTC UE and/or an eMTC UE may include, for example, a robot, a drone, a remote device, a sensor, a meter, a monitor, and/or a location tag, that may communicate with a base station, another device (e.g., a remote device), or some other entity. Some UEs 120 may be considered Internet-of-Things (IoT) devices, and/or may be implemented as NB-IoT (narrowband IoT) devices. Some UEs 120 may be considered a Customer Premises Equipment. A UE 120 may be included inside a housing that houses components of the UE 120, such as processor components and/or memory components. In some examples, the processor components and the memory components may be coupled together. For example, the processor components (e.g., one or more processors) and the memory components (e.g., a memory) may be operatively coupled, communicatively coupled, electronically coupled, and/or electrically coupled.

In general, any number of wireless networks 100 may be deployed in a given geographic area. Each wireless network 100 may support a particular RAT and may operate on one or more frequencies. A RAT may be referred to as a radio technology, an air interface, or the like. A frequency may be referred to as a carrier, a frequency channel, or the like. Each frequency may support a single RAT in a given geographic area in order to avoid interference between wireless networks of different RATs. In some cases, NR or 5G RAT networks may be deployed.

In some examples, two or more UEs 120 (e.g., shown as UE 120a and UE 120e) may communicate directly using one or more sidelink channels (e.g., without using a base station 110 as an intermediary to communicate with one another). For example, the UEs 120 may communicate using peer-to-peer (P2P) communications, device-to-device (D2D) communications, a vehicle-to-everything (V2X) protocol (e.g., which may include a vehicle-to-vehicle (V2V) protocol, a vehicle-to-infrastructure (V2I) protocol, or a vehicle-to-pedestrian (V2P) protocol), and/or a mesh network. In such examples, a UE 120 may perform scheduling operations, resource selection operations, and/or other operations described elsewhere herein as being performed by the base station 110.

Devices of the wireless network 100 may communicate using the electromagnetic spectrum, which may be subdivided by frequency or wavelength into various classes, bands, channels, or the like. For example, devices of the wireless network 100 may communicate using one or more operating bands. In 5G NR, two initial operating bands have been identified as frequency range designations FR1 (410 MHz - 7.125 GHz) and FR2 (24.25 GHz - 52.6 GHz). It should be understood that although a portion of FR1 is greater than 6 GHz, FR1 is often referred to (interchangeably) as a "Sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR4a or FR4-1 (52.6 GHz - 71 GHz), FR4 (52.6 GHz - 114.25 GHz), and FR5 (114.25 GHz - 300 GHz). Each of these higher frequency bands falls within the EHF band.

With the above examples in mind, unless specifically stated otherwise, it should be understood that the term "sub-6 GHz" or the like, if used herein, may broadly represent frequencies that may be less than 6 GHz, may be within FR1, or may include mid-band frequencies. Further, unless specifically stated otherwise, it should be understood that the term "millimeter wave" or the like, if used herein, may broadly represent frequencies that may include mid-band frequencies, may be within FR2, FR4, FR4-a or FR4-1, and/or FR5, or may be within the EHF band. It is contemplated that the frequencies included in these operating bands (e.g., FR1, FR2, FR3, FR4, FR4-a, FR4-1, and/or FR5) may be modified, and techniques described herein are applicable to those modified frequency ranges.

In some aspects, a device (e.g., UE 120) may include a communication manager 140. As described in more detail elsewhere herein, the communication manager 140 may transmit, via a broadcast, a first frame that indicates one or more of a device credential or a payload; receive, from the access point, a second frame that indicates one or more of the payload or an access point credential; associate with the access point based at least in part on the access point credential; and perform a communication, to a cloud computing system via the access point, after the device has been associated with the access point. Additionally, or alternatively, the communication manager 140 may perform one or more other operations described herein.

As indicated above, Fig. 1 is provided as an example. Other examples may differ from what is described with regard to Fig. 1.

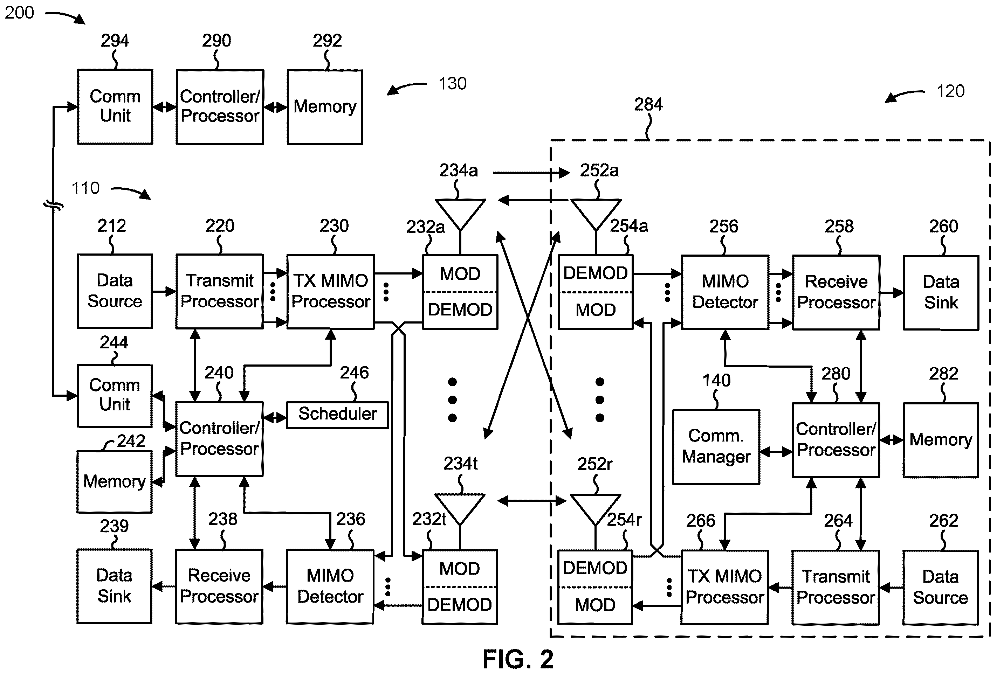

Fig. 2 is a diagram illustrating an example 200 of a base station 110 in communication with a UE 120 in a wireless network 100, in accordance with the present disclosure. The base station 110 may be equipped with a set of antennas 234a through 234t, such as *T* antennas (*T* ≥ 1). The UE 120 may be equipped with a set of antennas 252a through 252r, such as R antennas (*R* ≥ 1).

At the base station 110, a transmit processor 220 may receive data, from a data source 212, intended for the UE 120 (or a set of UEs 120). The transmit processor 220 may select one or more modulation and coding schemes (MCSs) for the UE 120 based at least in part on one or more channel quality indicators (CQIs) received from that UE 120. The base station 110 may process (e.g., encode and modulate) the data for the UE 120 based at least in part on the MCS(s) selected for the UE 120 and may provide data symbols for the UE 120. The transmit processor 220 may process system information (e.g., for semi-static resource partitioning information (SRPI)) and control information (e.g., CQI requests, grants, and/or upper layer signaling) and provide overhead symbols and control symbols. The transmit processor 220 may generate reference symbols for reference signals (e.g., a cell-specific reference signal (CRS) or a demodulation reference signal (DMRS)) and synchronization signals (e.g., a primary synchronization signal (PSS) or a secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide a set of output symbol streams (e.g., T output symbol streams) to a corresponding set of modems 232 (e.g., T modems), shown as modems 232a through 232t. For example, each output symbol stream may be provided to a modulator component (shown as MOD) of a modem 232. Each modem 232 may use a respective modulator component to process a respective output symbol stream (e.g., for OFDM) to obtain an output sample stream. Each modem 232 may further use a respective modulator component to process (e.g., convert to analog, amplify, filter, and/or upconvert) the output sample stream to obtain a downlink signal. The modems 232a through 232t may transmit a set of downlink signals (e.g., *T* downlink signals) via a corresponding set of antennas 234 (e.g., *T* antennas), shown as antennas 234a through 234t.

At the UE 120, a set of antennas 252 (shown as antennas 252a through 252r) may receive the downlink signals from the base station 110 and/or other base stations 110 and may provide a set of received signals (e.g., R received signals) to a set of modems 254 (e.g., *R* modems), shown as modems 254a through 254r. For example, each received signal may be provided to a demodulator component (shown as DEMOD) of a modem 254. Each modem 254 may use a respective demodulator component to condition (e.g., filter, amplify, downconvert, and/or digitize) a received signal to obtain input samples. Each modem 254 may use a demodulator component to further process the input samples (e.g., for OFDM) to obtain received symbols. A MIMO detector 256 may obtain received symbols from the modems 254, may perform MIMO detection on the received symbols if applicable, and may provide detected symbols. A receive processor 258 may process (e.g., demodulate and decode) the detected symbols, may provide decoded data for the UE 120 to a data sink 260, and may provide decoded control information and system information to a controller/processor 280. The term "controller/processor" may refer to one or more controllers, one or more processors, or a combination thereof. A channel processor may determine a reference signal received power (RSRP) parameter, a received signal strength indicator (RSSI) parameter, a reference signal received quality (RSRQ) parameter, and/or a CQI parameter, among other examples. In some examples, one or more components of the UE 120 may be included in a housing 284.

The network controller 130 may include a communication unit 294, a controller/processor 290, and a memory 292. The network controller 130 may include, for example, one or more devices in a core network. The network controller 130 may communicate with the base station 110 via the communication unit 294.

One or more antennas (e.g., antennas 234a through 234t and/or antennas 252a through 252r) may include, or may be included within, one or more antenna panels, one or more antenna groups, one or more sets of antenna elements, and/or one or more antenna arrays, among other examples. An antenna panel, an antenna group, a set of antenna elements, and/or an antenna array may include one or more antenna elements (within a single housing or multiple housings), a set of coplanar antenna elements, a set of non-coplanar antenna elements, and/or one or more antenna elements coupled to one or more transmission and/or reception components, such as one or more components of Fig. 2.

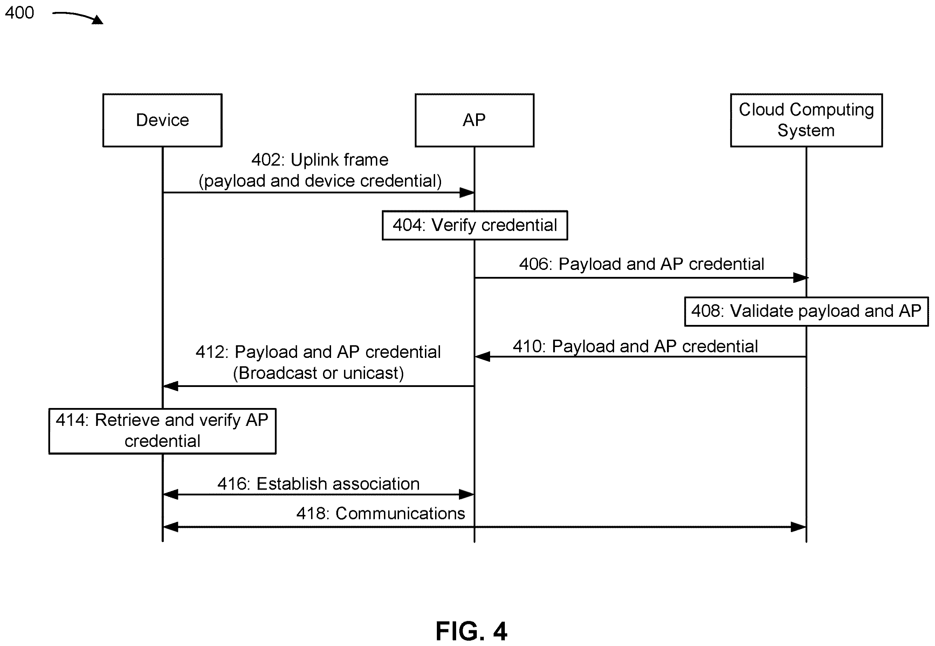

On the uplink, at the UE 120, a transmit processor 264 may receive and process data from a data source 262 and control information (e.g., for reports that include RSRP, RSSI, RSRQ, and/or CQI) from the controller/processor 280. The transmit processor 264 may generate reference symbols for one or more reference signals. The symbols from the transmit processor 264 may be precoded by a TX MIMO processor 266 if applicable, further processed by the modems 254 (e.g., for DFT-s-OFDM or CP-OFDM), and transmitted to the base station 110. In some examples, the modem 254 of the UE 120 may include a modulator and a demodulator. In some examples, the UE 120 includes a transceiver. The transceiver may include any combination of the antenna(s) 252, the modem(s) 254, the MIMO detector 256, the receive processor 258, the transmit processor 264, and/or the TX MIMO processor 266. The transceiver may be used by a processor (e.g., the controller/processor 280) and the memory 282 to perform aspects of any of the methods described herein (e.g., with reference to Figs. 4-8).

At the base station 110, the uplink signals from UE 120 and/or other UEs may be received by the antennas 234, processed by the modem 232 (e.g., a demodulator component, shown as DEMOD, of the modem 232), detected by a MIMO detector 236 if applicable, and further processed by a receive processor 238 to obtain decoded data and control information sent by the UE 120. The receive processor 238 may provide the decoded data to a data sink 239 and provide the decoded control information to the controller/processor 240. The base station 110 may include a communication unit 244 and may communicate with the network controller 130 via the communication unit 244. The base station 110 may include a scheduler 246 to schedule one or more UEs 120 for downlink and/or uplink communications. In some examples, the modem 232 of the base station 110 may include a modulator and a demodulator. In some examples, the base station 110 includes a transceiver. The transceiver may include any combination of the antenna(s) 234, the modem(s) 232, the MIMO detector 236, the receive processor 238, the transmit processor 220, and/or the TX MIMO processor 230. The transceiver may be used by a processor (e.g., the controller/processor 240) and the memory 242 to perform aspects of any of the methods described herein (e.g., with reference to Figs. 4-8).

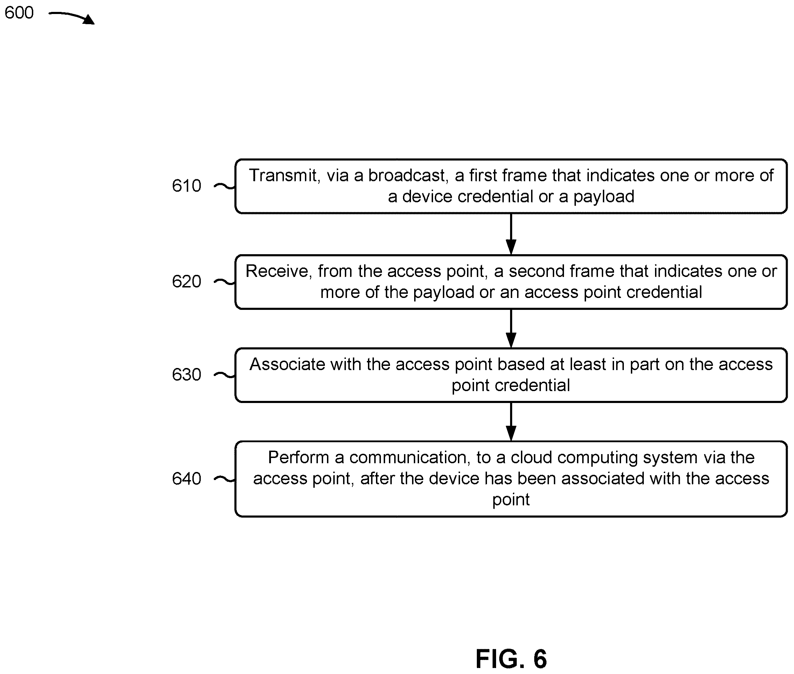

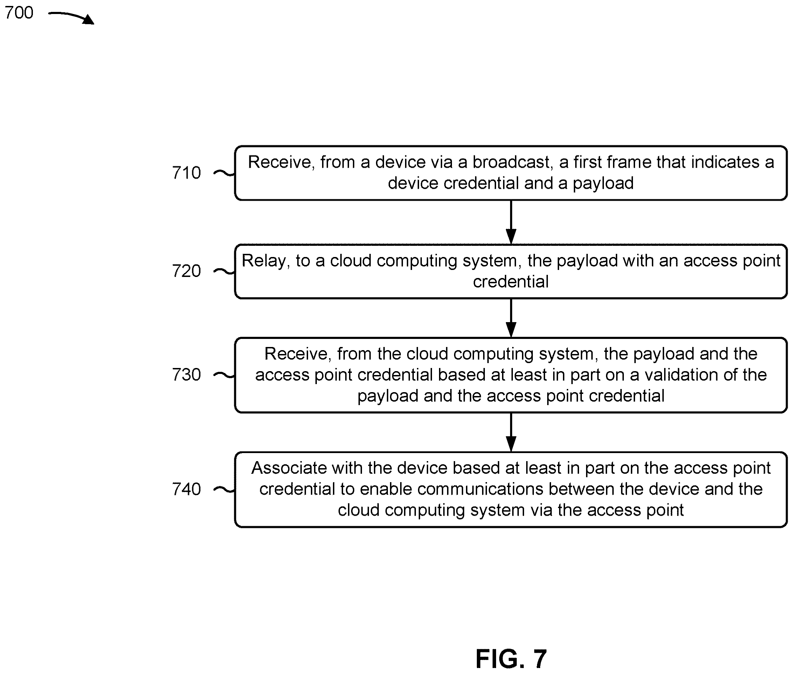

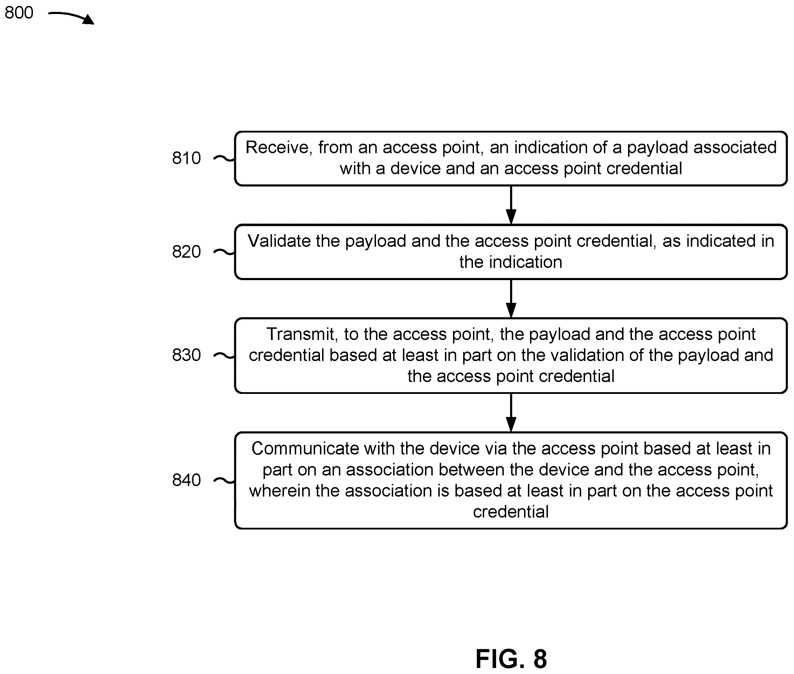

The controller/processor 240 of the base station 110, the controller/processor 280 of the UE 120, and/or any other component(s) of Fig. 2 may perform one or more techniques associated with associating devices with access points using credentials, as described in more detail elsewhere herein. In some aspects, the device described herein is the UE 120, is included in the UE 120, or includes one or more components of the UE 120 shown in Fig. 2. In some aspects, the access point described herein includes one or more components of the UE 120 or one or more components of the base station 110 shown in Fig. 2. In some aspects, the cloud computing system described herein includes one or more components of the UE 120 or one or more components of the base station 110 shown in Fig. 2. For example, controller/processor 240 of base station 110, controller/processor 280 of UE 120, and/or any other component(s) of Fig. 2 may perform or direct operations of, for example, process 600 of Fig. 6, process 700 of Fig. 7, process 800 of Fig. 8, and/or other processes as described herein. The memory 242 and the memory 282 may store data and program codes for the base station 110 and the UE 120, respectively. In some examples, the memory 242 and/or the memory 282 may include a non-transitory computer-readable medium storing one or more instructions (e.g., code and/or program code) for wireless communication. For example, the one or more instructions, when executed (e.g., directly, or after compiling, converting, and/or interpreting) by one or more processors of the base station 110 and/or the UE 120, may cause the one or more processors, the UE 120, and/or the base station 110 to perform or direct operations of, for example, process 600 of Fig. 6, process 700 of Fig. 7, process 800 of Fig. 8, and/or other processes as described herein. In some examples, executing instructions may include running the instructions, converting the instructions, compiling the instructions, and/or interpreting the instructions, among other examples.

In some aspects, a device (e.g. UE 120) includes means for transmitting, via a broadcast, a first frame that indicates one or more of a device credential or a payload; means for receiving, from the access point, a second frame that indicates one or more of the payload or an access point credential; means for associating with the access point based at least in part on the access point credential; and/or means for performing a communication, to a cloud computing system via the access point, after the device has been associated with the access point. In some aspects, the means for the device to perform operations described herein may include, for example, one or more of communication manager 140, antenna 252, demodulator 254, MIMO detector 256, receive processor 258, transmit processor 264, TX MIMO processor 266, modulator 254, controller/processor 280, or memory 282.

In some aspects, an access point includes means for receiving, from a device via a broadcast, a first frame that indicates a device credential and a payload; means for relaying, to a cloud computing system, the payload with an access point credential; means for receiving, from the cloud computing system, the payload and the access point credential based at least in part on a validation of the payload and the access point credential; and/or means for associating with the device based at least in part on the access point credential to enable communications between the device and the cloud computing system via the access point. In some aspects, the means for the access point to perform operations described herein may include, for example, one or more of transmit processor 220, TX MIMO processor 230, modulator 232, antenna 234, demodulator 232, MIMO detector 236, receive processor 238, controller/processor 240, memory 242, or scheduler 246.

In some aspects, a cloud computing system includes means for receiving, from an access point, an indication of a payload associated with a device and an access point credential; means for validating the payload and the access point credential, as indicated in the indication; means for transmitting, to the access point, the payload and the access point credential based at least in part on the validation of the payload and the access point credential; and/or means for communicating with the device via the access point based at least in part on an association between the device and the access point, wherein the association is based at least in part on the access point credential. In some aspects, the means for the cloud computing system to perform operations described herein may include, for example, one or more of transmit processor 220, TX MIMO processor 230, modulator 232, antenna 234, demodulator 232, MIMO detector 236, receive processor 238, controller/processor 240, memory 242, or scheduler 246.

While blocks in Fig. 2 are illustrated as distinct components, the functions described above with respect to the blocks may be implemented in a single hardware, software, or combination component or in various combinations of components. For example, the functions described with respect to the transmit processor 264, the receive processor 258, and/or the TX MIMO processor 266 may be performed by or under the control of the controller/processor 280.

As indicated above, Fig. 2 is provided as an example. Other examples may differ from what is described with regard to Fig. 2.

Institute of Electrical and Electronics Engineers (IEEE) 802.11bc may support an uplink broadcast feature. A device may broadcast an uplink frame having a higher layer protocol (HLP) payload. The uplink frame may be an enhanced broadcast service (EBCS) uplink frame. The device may be a laptop, a desktop computer, a Wi-Fi phone, and so on. An AP (e.g., an AP at an airport or a supercharger) may receive the uplink frame and forward (or relay) the uplink frame to a destination specified in the uplink frame. Alternatively, an EBCS proxy, a logical component which may be collocated with the AP, may provide an EBCS relaying service that relays the uplink frame to the destination specified in the uplink frame.

However, in some cases, the device that broadcasts the uplink frame may be an unassociated device, meaning that the device may not be associated with any APs that may receive the broadcast of the uplink frame. An AP may not forward data the uplink frame received from the unassociated device to a remote destination. In other words, the device may be unable to send data frames to an AP when the device is not associated with the AP, as the AP may discard the data. In order to associate with the AP, the unassociated device may need to obtain credentials, such as security credentials. The unassociated device may not be configured to exchange signaling with the AP in order to obtain the credentials to associate with the AP, which may enable the unassociated device to become associated with the AP and to be able to communicate with a cloud provider.

In various aspects of techniques and apparatuses described herein, a device may transmit, via a broadcast, an uplink frame that indicates a device credential and a payload (e.g., an HLP payload). The device may initially be unassociated with any access points within a communication range of the device. In other words, the device may initially not be associated with any access points within the communication range of the device. An access point within the communication range of the device may receive the uplink frame that indicates the device credential and the payload. The access point may forward, to a cloud provider associated with a cloud computing system, the payload with an access point credential. The access point may receive, from the cloud provider, the payload and the access point credential based at least in part on a validation of the payload and the access point credential. The access point may transmit, to the device, a downlink frame that indicates the payload and the access point credential. The device may associate with the access point based at least in part on the access point credential. After forming an association with the access point, the device may perform a communication with the cloud provider via the access point. As a result, the device, which may initially be unassociated with any access points within the communication range of the device, may become associated with one or more of the access points to allow communication between the device and the cloud provider.

In some aspects, operations described herein as being performed at an access point may be performed at an EBCS proxy that is collocated with an access point. For example, the EBCS proxy may receive an uplink frame from a device, forward a payload indicated in the uplink frame to a cloud provider, receive the payload and an EBCS proxy credential from the cloud provider, and associate with the device to enable communications between the device and the cloud provider via the EBCS proxy.

In some aspects, the EBCS proxy may provide an EBCS relaying service for an EBCS non-access point device to transmit an uplink frame with an HLP payload to a destination specified in the uplink frame. The HLP payload may be protected by end-to-end encryption. The EBCS proxy may evaluate the uplink frame according to certain criteria before relaying the HLP payload carried in the uplink frame to the destination. For example, the EBCS proxy may verify the device credential to determine whether the device transmitting the uplink frame is authorized to send the payload to the destination. The EBCS proxy may evaluate the criteria based at least in part on local policies installed at the EBCS proxy and/or based at least in part on a relationship established between the EBCS proxy and a cloud provider associated with the destination.

In some aspects, an ability to provide an unassociated device with access to the cloud provider may be useful in a variety of scenarios. For example, in an onboarding scenario, a device may be able to access a ride-hailing service after a user associated with the device arrives at an arrival hall of an airport in a foreign country. As another example, an electric vehicle may be able to upload sensor data over a secure channel while at a charging station. As yet another example, in a tracking scenario, smart luggage or a smart package may be able to send location data to a tracking service that operates in a cloud environment.

In some aspects, an IEEE 802.11bc based scheme for providing the unassociated device with access to the cloud provider may be different than a Wi-Fi hotspot based scheme. In the IEEE 802.11bc based scheme, an AP may not be required to advertise affiliated domains (or cloud providers with which a relationship has been formed), and a device may not be required to scan a medium before sending an uplink frame. Further, the IEEE 802.11bc based scheme may follow an unsolicited or on-demand model that is stateless, since the AP may relay a HLP payload to the cloud provider and then no longer communicate with the device. HLP payloads from multiple devices may be piggybacked to a same cloud provider. In the Wi-Fi hotspot based scheme, an AP may be required to advertise domains with whom the AP has established a relationship. A device may scan a medium to discover the AP and may query the AP to gather information about the cloud provider. Further, the Wi-Fi hotspot based scheme may follow a query-response protocol that is stateful, since the AP may maintain a dedicated session per device, thereby adding a burden on the AP and hindering scalability.

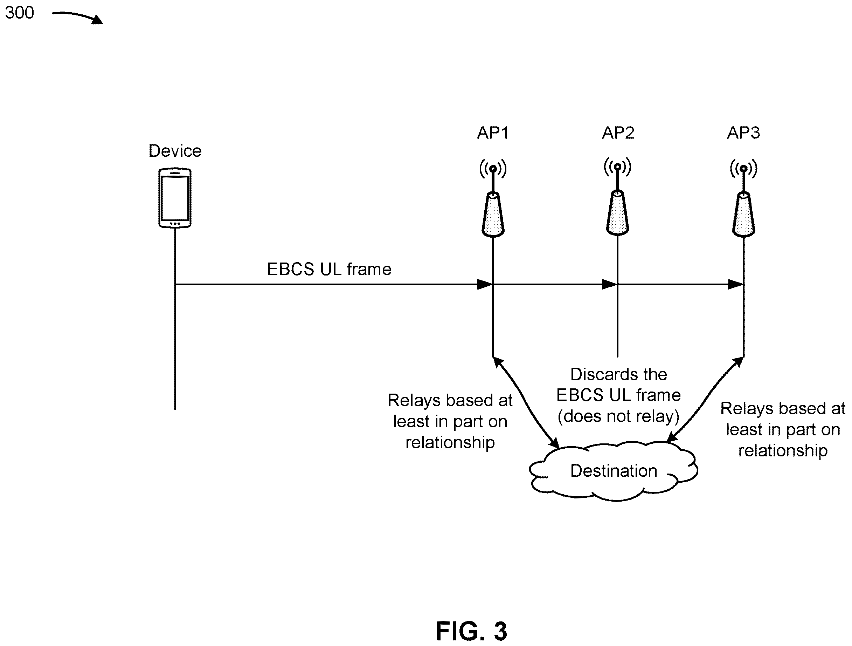

Fig. 3 is a diagram illustrating an example 300 of an uplink broadcast feature, in accordance with the present disclosure.

As shown in Fig. 3, a device may transmit an uplink frame (e.g., an EBCS uplink frame) via a broadcast. The uplink frame may be an unsolicited frame that is transmitted via the broadcast. The uplink frame may be received at a first AP (AP1), a second AP (AP2), and a third AP (AP3). The first AP, the second AP, and the third AP may be unassociated with the device. The first AP and the third AP may relay the uplink frame to a destination indicated in the uplink frame. The destination may be associated with a cloud provider. The uplink frame may carry a certificate associated with the device. The device may be provisioned with the certificate, which may be self-signed and/or signed by the cloud provider. The first AP and the third AP may relay the uplink frame based at least in part on relationships between the first AP and the third AP with the cloud provider. The certificate associated with the device may be installed at the first AP and the third AP when the relationships are established between the first AP and the third AP with the cloud provider. The first AP and the third AP may verify the certificate associated with the device before relaying the uplink frame to the destination associated with the cloud provider. The first AP and the third AP may verify the certificate associated with the device, as indicated in the uplink frame, using the certificate associated with the device already installed at the first AP and the third AP, respectively. In some cases, the first AP and the third AP may append additional information before relaying the uplink frame to the destination associated with the cloud provider.

In some cases, the second AP may not have a relationship with the cloud provider, so the second AP may discard the uplink frame. In other words, the second AP may not relay the uplink frame for the device.

As indicated above, Fig. 3 is provided as an example. Other examples may differ from what is described with regard to Fig. 3.

Fig. 4 is a diagram illustrating an example 400 associated with associating devices with access points using credentials, in accordance with the present disclosure. As shown in Fig. 4, example 400 includes communication between a device (e.g., UE 120), an access point (e.g., a WiFi access point), and a cloud computing system. In some aspects, the device and the access point may be included in a wireless network, such as wireless network 100.

In some aspects, instead of the access point, an EBCS proxy which may be collocated with the access point may communicate with the device and the cloud computing system. In some aspects, the cloud computing system may be associated with a cloud provider.

In some aspects, the access point may be affiliated with an EBCS proxy to provide a relaying service. However, the access point may be replaced with an EBCS station (STA) that is affiliated with an EBCS proxy and provides a relaying service without establishing an infrastructure basic service set (BSS). In some aspects, an EBCS STA affiliated with an EBCS proxy may be an access point that has established its own infrastructure BSS, or an STA that provides a relaying service without establishing an infrastructure BSS.

As shown by reference number 402, the device may transmit, via a broadcast, an uplink frame that indicates a device credential, a payload, and a frame signature. In some aspects, the device credential may be signed by the cloud computing system. The device credential may be a device certificate. In some aspects, the payload may include a device identifier associated with the device, security credentials associated with the device, and/or service-specific information. In some aspects, the frame signature may be associated with the uplink frame and may be derived based at least in part on the device credential. Further, the uplink frame may indicate a uniform resource identifier (URI) associated with a destination, where the destination may be associated with the cloud computing system. In some aspects, the uplink frame may be a first frame.

In some aspects, the device credential may be a device certificate that is provisioned when the device is manufactured or when a certain application is installed on the device. The device certificate may be a STA certificate. In some aspects, the payload may be protected end-to-end using an asymmetric key between the device and the cloud computing system. For example, the payload (e.g., an HLP payload) may be encrypted using the cloud computing system's public key, which only the cloud computing system may decrypt using the cloud computing system's private key. In some aspects, the security credentials associated with the device in the payload may be the device credential (e.g., the STA certificate). In some aspects, the service-specific information may indicate an amount of data to upload to a server, or a desired destination associated with a user (e.g., a desired location of the user). The cloud provider system may provide additional information to the access point based at least in part on the service-specific information, where the additional information may indicate a duration of a session, and/or an amount of data permitted during the session. In some aspects, the frame signature may ensure that content in the uplink frame is not tampered with. For example, if content in the uplink frame is later modified, the frame signature computed at the access point may not match an original frame signature.

In some aspects, the device may be initially unassociated with the access point. For example, the device may initially not be associated with any access points within a communication range of the device.

In some aspects, the device may transmit the uplink frame based at least in part on a condition being satisfied. For example, the condition may be satisfied based at least in part on an application being launched on the device. The application may be a ride-hailing application that is launched on the device after a user associated with the device arrives at an arrival hall of an airport in a foreign country. As another example, the condition may be satisfied based at least in part on the device performing a task. The task may involve the device (e.g., an electric vehicle) arriving at a charging station. In some aspects, the device may transmit the uplink frame in a periodic manner. For example, the device may be smart luggage or a smart package that periodically transmits the uplink frame to convey location data associated with the device.

As shown by reference number 404, the access point may verify the device credential with the device, as indicated in the uplink frame, based at least in part on a cloud computing system credential that is previously installed on the access point. In other words, the access point may verify that the device is authorized to transmit the payload to the cloud computing system based at least in part on the cloud computing system credential. The device credential may be signed by the cloud computing system.

In some aspects, the access point may discard contents of the uplink frame when a condition is met. The access point may discard the contents of the uplink frame when a device certificate subfield is present in the uplink frame and at least one of the following is true: a credential of the destination indicated in the uplink frame (e.g. the cloud computing system credential) or a credentials of a central authority (such as a certificate authority) that signed the device credential is not installed, a verification of the device credential using an installed credential of the destination or credentials of a central authority fails, or a frame signature type subfield is not associated with a higher layer authentication and a verification of the frame signature using the device credential fails. The access point may discard the contents of the uplink frame when a replay protection subfield is present in the uplink frame and at least one of the following is true: a time subfield is set to a nonzero value and a difference between the nonzero value and a time the uplink frame is received satisfies a threshold value (e.g., greater than an acceptable value), a frame count subfield is nonzero and is less than or equal to a value in a previously received uplink frame (if any), or the frame count subfield is zero and the value in the previously received uplink frame (if any) is not equal to 2³² - 1 or less (within an acceptable range).

In some aspects, an acceptable time difference at the access point may be configured based at least in part on local policies or based at least in part on a relationship with the destination indicated in the uplink frame. In some aspects, the access point may store a last known frame count value in accordance with a validity period. In some aspects, the access point may maintain a sliding window of frame count values to handle packet loss and wrap-around of the frame count subfield. The frame count subfield may wrap around while access points in a neighborhood have lost multiple frames. The slide window at the access point may be for replay protection.

In some aspects, the access point may maintain a sliding window of frame count values to handle packet loss and wrap-around of a frame count subfield, where the frame count subfield may wrap around when access points in a neighborhood have lost multiple frames including a frame with a frame count (FC) 2³² - 1 and zero. For example, a frame with FC=2³² - 4 may be received, a frame with FC=2³² - 3 may be received, a frame with FC=2³² - 2 may be received, a frame with FC=2³² - 1 may be lost, a frame with FC=0 may be lost, a frame with FC=1 may be lost, a frame with FC=2 may be received, and a frame with FC=3 may be received.

As shown by reference number 406, the access point may relay, to the cloud computing system, the payload with an access point credential. The access point may forward the payload with the access point credential based at least in part on successfully verifying the device credential. The access point credential may be a temporary key (or temporary certificate) that is appended to the payload to enable the device to become associated with the access point. In some cases, the access point may append additional information, such as an indication of a location associated with the device, based at least in part on an agreement with the cloud computing system. In some aspects, the access point may relay or forward the payload and the access point credential after evaluating the device credential.

In some aspects, a link between the access point and the cloud computing system may be secure. For example, the link may be secured using transport layer security (TLS), which may create a secure transmission control protocol (TCP) connection between the access point and the cloud computing system. As another example, the link may be secured using Internet Protocol security (IPsec) between an access network associated with the access point and the cloud computing system. In some aspects, the link may be secured using an EBCS proxy entity associated with the access point.

In some aspects, the link between the access point and the cloud computing system may be secure, and the cloud computing system may validate that information is received from a trusted access point. The cloud computing system may verify the access point based at least in part on the access point's credential (e.g., the access point's certificate). The information may be encrypted using a secure key established between the access point and the cloud computing system.

In some aspects, content exchanged between the access point and the cloud computing system may be protected using an asymmetric key between the access point and the cloud computing system. Frame contents sent by the access point to the cloud computing system may be encrypted using the cloud computing system's public key and only the cloud computing system may decrypt the frame contents using the cloud computing system's private key. Similarly, frame content from the cloud computing system to the access point may be encrypted using the access point's public key and only the access point may decrypt the frame content using the access point's private key.

In some aspects, the access point may communicate with the cloud computing system via an entity on a local area network (LAN), such as a network controller. The network controller may maintain relationships with one or more cloud computing systems when multiple access points in an area are connected to the cloud computing system via the network controller.

In some aspects, the access point may stop a maintenance of state information associated with the device after the payload and the access point credential are forwarded to the cloud computing system. In other words, at this point, the access point may no longer maintain any state information regarding the device.

In some aspects, evaluating criteria, maintaining or managing a relationship with the cloud computing system, appending additional information to the payload, or limiting a size of the payload relayed on behalf of the device may be performed at the EBCS proxy entity associated with the access point. The EBCS proxy entity may be collocated within the access point. Alternatively, the EBCS proxy entity may be in a LAN associated with the access point.

In some aspects, the EBCS proxy entity may reside in a common entity included in a local area network. One or more access points may be connected to the common entity in the local area network on which the EBCS proxy entity resides.

As shown by reference number 408, the cloud computing system may validate the payload and the access point credential, as received from the access point. The cloud computing system may validate the payload based at least in part on the device credential. Further, the cloud computing system may verify that the payload and the access point credential, as received from the access point, is from a trusted access point based at least in part on the access point credential.

As shown by reference number 410, the cloud computing system may transmit, to the access point, the payload and the access point credential based at least in part on the validation of the payload and the access point credential. The payload and the access point credential that are transmitted to the access point may be intended for the device.

As shown by reference number 412, the access point may transmit, to the device, a downlink frame that indicates the payload and the access point credential. In other words, the access point may transmit the payload and the access point credential, which was previously received from the cloud computing system. In some aspects, the access point may transmit the downlink frame to the device as a unicast transmission. In some aspects, the access point may transmit the downlink frame via a broadcast transmission. In this example, the downlink frame may be a beacon frame broadcast from the access point. The downlink frame may indicate a device identifier associated with the device and the access point credential. The device identifier may be a media access control (MAC) address associated with the device, or a hash of the MAC address associated with the device. In some aspects, the downlink frame may be a second frame.

In some aspects, the device may receive the downlink frame from the access point. In some aspects, the device may receive the downlink frame via the unicast transmission. In some aspects, the device may receive the downlink frame via the broadcast transmission. In this case, the device may identify the MAC address or the hash of the MAC address indicated in the downlink frame to identify that the payload and the access point credential is intended for the device.

As shown by reference number 414, the device may retrieve, from the downlink frame, the access point credential based at least in part on the cloud computing system credential. The device may verify the payload and the access point credential based at least in part on the cloud computing system credential. In some aspects, content in the second frame (e.g., HLP content) from the cloud computing system may be protected end-to-end using asymmetric keys. The payload from the cloud computing system to the device may be encrypted using the device's public key, which only the device may decrypt using a private key.

As shown by reference number 416, the device may establish an association with the access point based at least in part on the access point credential. For example, the device may transmit, to the access point, an association request that indicates the device credential. The device may receive, from the access point, an association response that indicates the access point credential. The device may verify the access point credential, as indicated in the association response, with the access point credential, as indicated in the downlink frame. In some aspects, the device may establish the association with the access point based at least in part on a public key-based authentication.

As shown by reference number 418, the device may perform a communication, to the cloud computing system via the access point, after the device has been associated with the access point. The device may be able to communicate with the cloud computing system via the access point based at least in part on the association between the device and the access point, where the association may be based at least in part on the access point credential (e.g., the temporary key).

In some aspects, the device may receive, from the access point, a list of addresses associated with the cloud computing system that are accessible to the device. Addresses that are not indicated in the list of addresses may not be accessible to the device. In some aspects, the device may receive, from the access point, an instruction that limits a payload size of communications with the cloud computing system or a quantity of requests that are permitted to be forwarded on behalf of the device from the access point to the cloud computing system over a time period. The payload size and the quantity of requests may be based at least in part on a local policy at the access point or may be based at least in part on a relationship between the access point and the cloud computing system. The device may perform communications with the cloud computing system based at least in part on the list of addresses and/or the instruction that limits the payload size and/or the quantity of requests.

In some aspects, the access point may limit an amount of relaying of payloads (e.g., HLP payloads) or a frequency of relating of payloads in a pre-associated state (e.g., prior to the association being formed between the access point and the device). The access point (or EBCS proxy entity) and/or the cloud computing system may determine to not provide unlimited relaying of HLP payloads in the pre-associated state (e.g., to thwart denial of service (DoS) attacks).

In some aspects, the access point may transmit, to the device, an instruction that limits a duration of an association between the device and the access point. The access point may disassociate with the device after a certain period of time based at least in part on the instruction, which may be received from the cloud computing system. From a perspective of the device, the instruction to dissociate may be a disassociation imminent message.

As indicated above, Fig. 4 is provided as an example. Other examples may differ from what is described with regard to Fig. 4.

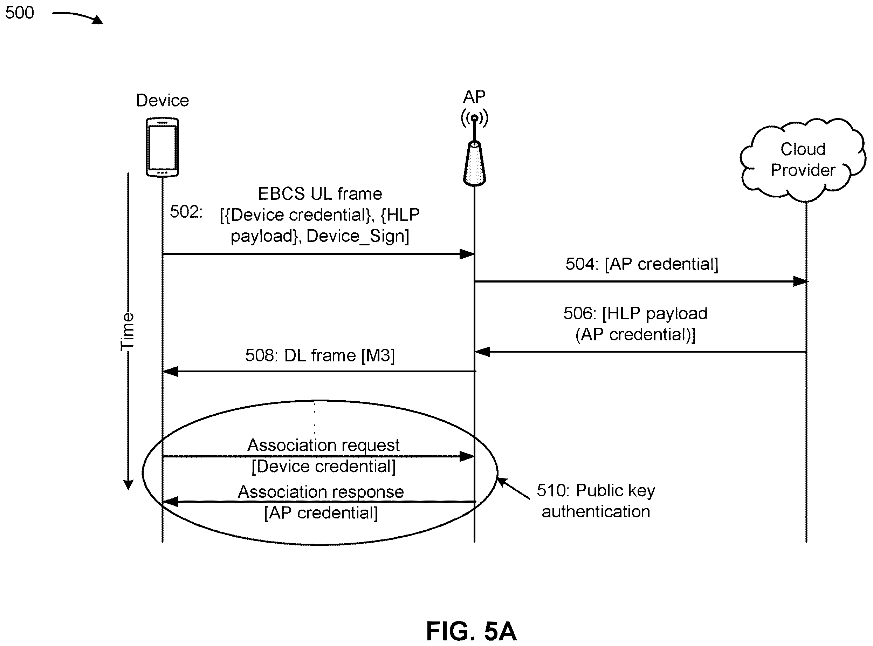

Fig. 5A is a diagram illustrating an example 500 associated with associating devices with access points using credentials, in accordance with the present disclosure. As shown in Fig. 5A, example 500 includes communication between a device (e.g., UE 120), an access point (e.g., a WiFi access point), and a cloud provider which may be associated with a cloud computing system. In some aspects, the device and the access point may be included in a wireless network such as wireless network 100.

As shown by reference number 502, the device may transmit an uplink frame (e.g., an EBCS uplink frame). The uplink frame may indicate a device credential, which may be signed by the cloud provider. The uplink frame may indicate a payload (e.g., an HLP payload), which may indicate a device identifier, security credentials, service-specific details, and/or additional security fields for replay protection and/or a frame signature. The uplink frame may only be decrypted by the cloud provider. The uplink frame may indicate the device credential, indicating that the uplink frame has been signed by the device.

In some aspects, the device may transmit the uplink frame based at least in part on a condition being met, such as when an electric vehicle begins charging at a supercharger or when a user turns on a ride-hailing application at an airport.

In some aspects, the access point in a neighborhood of the device may receive the uplink frame via the broadcast. In other words, the access point may be in a communication range of the device. In some aspects, the access point may verify the credential indicated in the uplink frame. The access point may validate the device credential. The access point may have a relationship with the cloud provider, and the access point may validate whether the device is authorized to transmit the payload to the cloud provider. The access point may validate the device credential based at least in part on an installed cloud provider certificate, which may have been previously installed on the access point when the relationship between the access point and the cloud provider was established.

As shown by reference number 504, the access point may relay the payload to the cloud provider, based at least in part on the validation of the device credential. The access point may append an access point credential (e.g., a temporary key or a temporary certificate) to the payload, which may enable the device to establish an association with the access point. The access point may append additional information, such as an indication of a location associated with the device, based at least in part on an agreement between the access point and the cloud provider. After the access point has transmitted the payload and the access point credential, the access point may no longer maintain state information about the device.

In some aspects, the cloud provider may validate that a frame containing the payload and the access point credential was received from a trusted access point, based at least in part on the access point credential. The cloud provider may be able to validate the access point credential based at least in part on the relationship between the cloud provider and the access point. For example, the cloud provider may possess a copy of the access point credential, and the access point may possess a copy of a cloud provider credential, which may be exchanged when the relationship between the cloud provider and the access point is established.

In some aspects, the cloud provider may verify and decrypt the payload based at least in part on a relationship between the cloud provider and the device. The cloud provider may verify and decrypt the payload based at least in part on the device credential, which may be obtained by the cloud provider when the relationship between the cloud provider and the device is established. Further, the device may obtain a copy of the cloud provider credential when the relationship between the cloud provider and the device is established.

In some aspects, the access point may transmit the payload and the access point credential to the cloud provider via an entity in a local area network, such as a network controller. The network controller may maintain a relationship with one or more cloud providers when multiple access points in a neighborhood are connected to the one or more cloud providers via the network controller.

As shown by reference number 506, the cloud provider may transmit, to the access point, a frame containing the payload and the access point credential. The payload with the access point credential may be intended for the device. The cloud provider may transmit the payload with the access point credential based at least in part on validating the frame containing the payload and the access point credential that was received from the access point.

As shown by reference number 508, the access point may transmit the payload with the access point credential to the device. The access point may transmit the payload with the access point credential via a broadcast transmission or via an individually addressed frame.

In some aspects, the device may verify the payload and retrieve information from the payload (e.g., the access point credential) based at least in part on the cloud provider credential. In other words, the device may use the cloud provider credential to retrieve the access point credential carried in the payload.

As shown by reference number 510, the device may use the access point credential to perform a secure association with the access point. For example, the device may transmit an association request to the access point. The association request may indicate the device credential. The device may receive, from the access point, an association response which may indicate the access point credential. The device may verify the access point credential received from the access point during an association between the device and the access point based at least in part on the access point credential that was received in the payload. In some aspects, the device may transmit the association request and receive the association response based at least in part on a public key-based authentication during the association between the device and the access point.

As indicated above, Fig. 5A is provided as an example. Other examples may differ from what is described with regard to Fig. 5A.

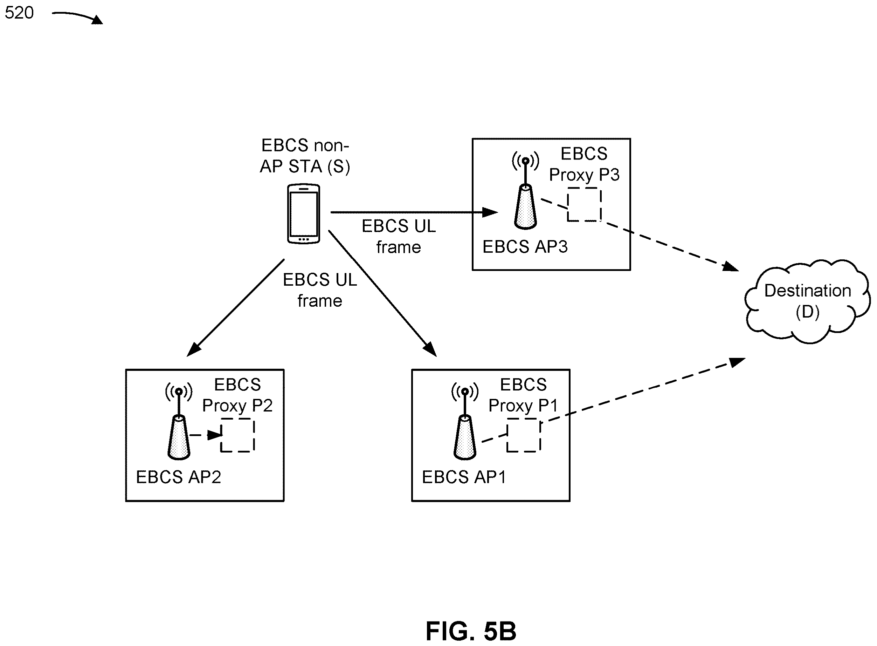

Fig. 5B is a diagram illustrating an example 520 associated with relaying using an access point collocated with a proxy, in accordance with the present disclosure.

As shown in Fig. 5B, a relaying operation may occur at an EBCS access point with a collocated EBCS proxy. A relaying service may be based at least in part on a relationship with a specified destination. EBCS proxy P1 and EBCS proxy P3 may have established a relationship with a destination (D). An EBCS non-AP STA (S) may transmit an EBCS UL frame that is received by EBCS APs in the neighborhood (e.g., AP1, AP2 and AP3). The EBCS UL frame may carry an HLP payload, a field carrying an address of the destination and other fields for security. EBCS proxy P1 and EBCS proxy P3 may verify a certificate of the EBCS non-AP STA based at least in part on an agreement with the destination and perform a replay check, to determine whether criteria for relaying the HLP payload to the destination is met. When a local policy or the agreement with the destination involves limiting an amount or frequency of HLP payloads being sent to the destination, then each of EBCS proxy P1 and EBCS proxy P3 may not send an HLP payload to the destination, based at least in part on a determination that a limit was reached. When the agreement with the destination involves an inclusion of additional information, EBCS proxy P1 and EBCS proxy P3 may append appropriate information, before relaying the HLP payload. EBCS AP2 may discard the EBCS UL frame based at least in part on the EBCS AP2 not providing a relaying service, a collocated proxy of EBCS AP2 not having established a relationship with the destination, or one or more criteria for relaying not having been satisfied.

As indicated above, Fig. 5B is provided as an example. Other examples may differ from what is described with regard to Fig. 5B.

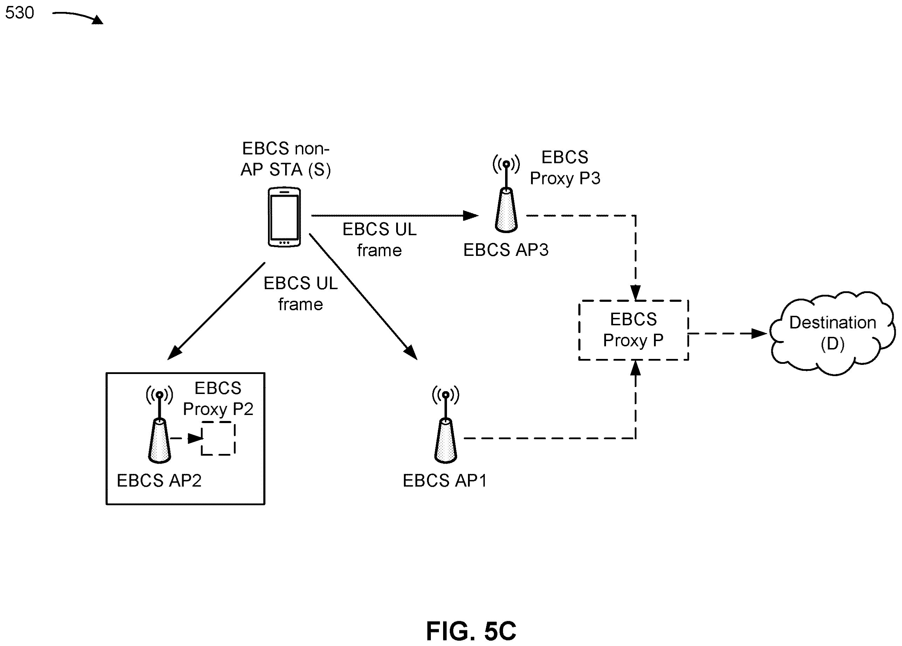

Fig. 5C is a diagram illustrating an example 530 associated with relaying using an access point that is not collocated with a proxy, in accordance with the present disclosure.

As shown in Fig. 5C, a relaying operation may occur when an access point is not collocated with an EBCS proxy. An EBCS proxy (P) may not be collocated with either EBCS AP1 or EBCS AP3, but rather may reside on an entity in a LAN associated with EBCS AP1 and EBCS AP3. EBCS AP1 and EBCS AP3 may relay contents of an EBCS UL frame to the EBCS proxy, which may evaluate whether criteria for relaying are met before relaying an HLP payload to a specified destination. A configuration in which the EBCS proxy is not collocated with EBCS APs may be prevalent in commercial deployments, such as airports, train stations, malls, or a warehouse, where multiple EBCS APs are likely to be connected to a single entity on a common LAN, such as a network controller, which provides access to destinations outside the LAN. In such a configuration, the EBCS proxy may reside on an entity in the LAN. On the other hand, the configuration may also be prevalent in residential deployments where an EBCS AP has direct connectivity to destinations outside the LAN.

As indicated above, Fig. 5C is provided as an example. Other examples may differ from what is described with regard to Fig. 5C.

Fig. 6 is a diagram illustrating an example process 600 performed, for example, by a device, in accordance with the present disclosure. Example process 600 is an example where the device (e.g., UE 120) performs operations associated with associating devices with access points using credentials.

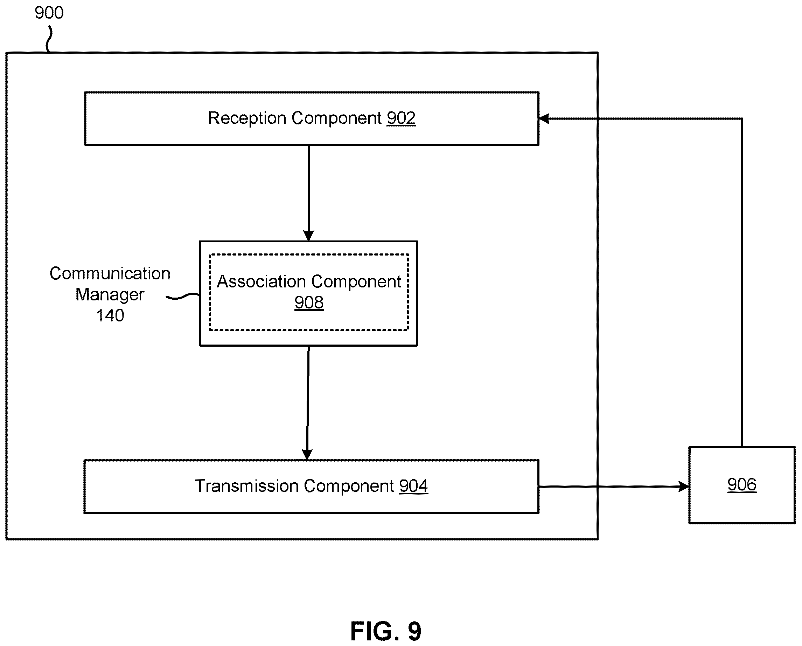

As shown in Fig. 6, in some aspects, process 600 may include transmitting, via a broadcast, a first frame that indicates a device credential and a payload (block 610). For example, the device (e.g., using communication manager 140 and/or transmission component 904, depicted in Fig. 9) may transmit, via a broadcast, a first frame that indicates a device credential and a payload, as described above.

As further shown in Fig. 6, in some aspects, process 600 may include receiving, from the access point, a second frame that indicates the payload and an access point credential (block 620). For example, the device (e.g., using communication manager 140 and/or reception component 902, depicted in Fig. 9) may receive, from the access point, a second frame that indicates the payload and an access point credential, as described above.

As further shown in Fig. 6, in some aspects, process 600 may include associating with the access point based at least in part on the access point credential (block 630). For example, the device (e.g., using communication manager 140 and/or association component 908, depicted in Fig. 9) may associate with the access point based at least in part on the access point credential, as described above.

As further shown in Fig. 6, in some aspects, process 600 may include performing a communication, to a cloud computing system via the access point, after the device has been associated with the access point (block 640). For example, the device (e.g., using communication manager 140, and/or reception component 902 and/or transmission component 904, depicted in Fig. 9) may perform a communication, to a cloud computing system via the access point, after the device has been associated with the access point, as described above.

Process 600 may include additional aspects, such as any single aspect or any combination of aspects described below and/or in connection with one or more other processes described elsewhere herein.

In a first aspect, process 600 includes retrieving, from the second frame, the access point credential based at least in part on a cloud computing system credential, wherein content in the second frame is from the cloud computing system and is protected end-to-end.

In a second aspect, alone or in combination with the first aspect, the content in the second frame is protected end-to-end using asymmetric keys.

In a third aspect, alone or in combination with one or more of the first and second aspects, the device credential is signed by the cloud computing system, the payload includes one or more of a device identifier, security credentials associated with the device, or service-specific information, the first frame indicates a frame signature that is associated with the first frame and is derived based at least in part on the device credential, and the first frame indicates a uniform resource identifier associated with a destination, wherein the destination is associated with the cloud computing system.

In a fourth aspect, alone or in combination with one or more of the first through third aspects, the device credential is a device certificate that is provisioned when the device is manufactured or when a certain application is installed on the device, the payload is protected end-to-end using an asymmetric key between the device and the cloud computing system, and the security credentials associated with the device in the payload is the device credential.

In a fifth aspect, alone or in combination with one or more of the first through fourth aspects, the service-specific information indicates one or more of an amount of data to upload to a server, or a desired destination associated with a user, and additional information indicating a duration of a session or an amount of data permitted during the session is indicated from the cloud computing system to the access point based at least in part on the service-specific information.

In a sixth aspect, alone or in combination with one or more of the first through fifth aspects, transmitting the first frame is based at least in part on a condition being satisfied.

In a seventh aspect, alone or in combination with one or more of the first through sixth aspects, the condition is satisfied based at least in part on an application being launched on the device.

In an eighth aspect, alone or in combination with one or more of the first through seventh aspects, the condition is satisfied based at least in part on the device performing a task.

In a ninth aspect, alone or in combination with one or more of the first through eighth aspects, the first frame is transmitted in a periodic manner.

In a tenth aspect, alone or in combination with one or more of the first through ninth aspects, process 600 includes receiving the second frame via a unicast transmission.

In an eleventh aspect, alone or in combination with one or more of the first through tenth aspects, process 600 includes receiving the second frame via a broadcast transmission, wherein the second frame indicates a device identifier associated with the device and the access point credential.

In a twelfth aspect, alone or in combination with one or more of the first through eleventh aspects, the second frame is a beacon frame broadcasted from the access point.

In a thirteenth aspect, alone or in combination with one or more of the first through twelfth aspects, the device identifier is a media access control address associated with the device, or a hash of the media access control address associated with the device.

In a fourteenth aspect, alone or in combination with one or more of the first through thirteenth aspects, process 600 includes verifying the payload and the access point credential based at least in part on the cloud computing system credential.

In a fifteenth aspect, alone or in combination with one or more of the first through fourteenth aspects, associating with the access point comprises transmitting, to the access point, an association request that indicates the device credential, receiving, from the access point, an association response that indicates the access point credential, and verifying the access point credential, as indicated in the association response, with the access point credential, as indicated in the second frame.

In a sixteenth aspect, alone or in combination with one or more of the first through fifteenth aspects, associating with the access point is based at least in part on a public key-based authentication.

In a seventeenth aspect, alone or in combination with one or more of the first through sixteenth aspects, the access point credential is a temporary key that is appended to the payload to enable the device to become associated with the access point.

In an eighteenth aspect, alone or in combination with one or more of the first through seventeenth aspects, process 600 includes receiving, from the access point, a list of addresses associated with the cloud computing system that are accessible to the device, wherein addresses not indicated in the list of addresses are not accessible to the device.

In a nineteenth aspect, alone or in combination with one or more of the first through eighteenth aspects, process 600 includes receiving, from the access point, an instruction that limits a payload size of communications with the cloud computing system or a quantity of requests that are permitted to be relayed on behalf of the device from the access point to the cloud computing system over a time period, wherein the payload size and the quantity of requests are based at least in part on a local policy at the access point or based at least in part on a relationship between the access point and the cloud computing system.

In a twentieth aspect, alone or in combination with one or more of the first through nineteenth aspects, process 600 includes receiving, from the access point, an instruction that limits a duration of an association between the device and the access point, wherein the access point is configured to disassociate with the device after a certain period of time based at least in part on the instruction from the cloud computing system.

In a twenty-first aspect, alone or in combination with one or more of the first through twentieth aspects, process 600 includes receiving, from the access point, an instruction that limits an amount or frequency of relaying of payloads for the device while in a pre-associated state, wherein the device is in the pre-associated state prior to associating with the access point.

Although Fig. 6 shows example blocks of process 600, in some aspects, process 600 may include additional blocks, fewer blocks, different blocks, or differently arranged blocks than those depicted in Fig. 6. Additionally, or alternatively, two or more of the blocks of process 600 may be performed in parallel.

Fig. 7 is a diagram illustrating an example process 700 performed, for example, by an access point, in accordance with the present disclosure. Example process 700 is an example where the access point performs operations associated with associating devices with access points using credentials.

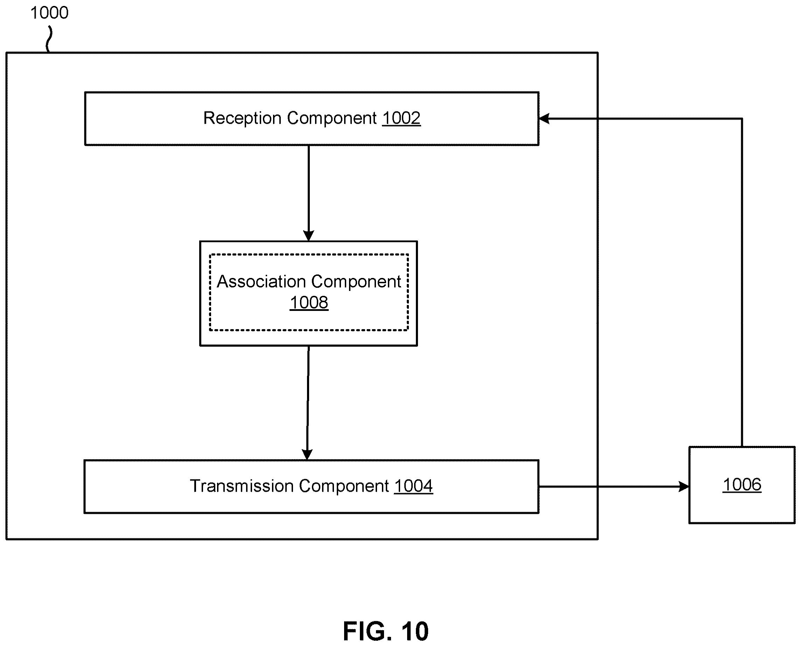

As shown in Fig. 7, in some aspects, process 700 may include receiving, from a device via a broadcast, a first frame that indicates a device credential and a payload (block 710). For example, the access point (e.g., using reception component 1002, depicted in Fig. 10) may receive, from a device via a broadcast, a first frame that indicates a device credential and a payload, as described above.

As further shown in Fig. 7, in some aspects, process 700 may include relaying, to a cloud computing system, the payload with an access point credential (block 720). For example, the access point (e.g., using transmission component 1004, depicted in Fig. 10) may relay, to a cloud computing system, the payload with an access point credential, as described above.

As further shown in Fig. 7, in some aspects, process 700 may include receiving, from the cloud computing system, the payload and the access point credential based at least in part on a validation of the payload and the access point credential (block 730). For example, the access point (e.g., using reception component 1002, depicted in Fig. 10) may receive, from the cloud computing system, the payload and the access point credential based at least in part on a validation of the payload and the access point credential, as described above.

As further shown in Fig. 7, in some aspects, process 700 may include associating with the device based at least in part on the access point credential to enable communications between the device and the cloud computing system via the access point (block 740). For example, the access point (e.g., using association component 1008, depicted in Fig. 10) may associate with the device based at least in part on the access point credential to enable communications between the device and the cloud computing system via the access point, as described above.

Process 700 may include additional aspects, such as any single aspect or any combination of aspects described below and/or in connection with one or more other processes described elsewhere herein.

In a first aspect, one or more of evaluating criteria, maintaining or managing a relationship with the cloud computing system, appending additional information to the payload, or limiting a size of the payload relayed on behalf of the device is performed at a proxy entity associated with the access point, wherein the proxy entity is collocated within the access point or the proxy entity in a local area network associated with the access point.

In a second aspect, alone or in combination with the first aspect, a link between the access point and the cloud computing system is secured using transport layer security or Internet Protocol security, wherein the link is secured using the access point or using a proxy entity associated with the access point.

In a third aspect, alone or in combination with one or more of the first and second aspects, content exchanged between the access point and the cloud computing system is protected using an asymmetric key between the access point and the cloud computing system.

In a fourth aspect, alone or in combination with one or more of the first through third aspects, process 700 includes transmitting, to the device, a second frame that indicates the payload and the access point credential.

In a fifth aspect, alone or in combination with one or more of the first through fourth aspects, process 700 includes verifying the device credential, as indicated in the first frame, based at least in part on a cloud computing system credential that is previously installed on the access point, wherein relaying the payload with the access point credential is based at least in part on verifying the device credential.

In a sixth aspect, alone or in combination with one or more of the first through fifth aspects, process 700 includes verifying that the device is authorized to transmit the payload to the cloud computing system based at least in part on the device credential, wherein the device credential is signed by the cloud computing system, and wherein the device is verified based at least in part on the cloud computing system credential.

In a seventh aspect, alone or in combination with one or more of the first through sixth aspects, process 700 includes discarding the first frame when a device certificate subfield is present in the first frame and one or more of a cloud computing system credential or a credentials of a central authority that signed the device credential is not installed, a verification of the device credential using an installed credential of a destination associated with the cloud computing system or the credentials of the central authority fails, or a frame signature type subfield is not associated with a higher layer authentication and a verification of a frame signature associated with the first frame using the device credential fails.

In an eighth aspect, alone or in combination with one or more of the first through seventh aspects, process 700 includes discarding the first frame when a replay protection subfield is present in the first frame and one or more of a time subfield is set to a nonzero value and a difference between the nonzero value and a time the first frame is received satisfies a threshold value, a frame count subfield is nonzero and is less than or equal to a value in a previously received first frame, or the frame count subfield is zero and the value in the previously received first frame satisfies a threshold value.

In a ninth aspect, alone or in combination with one or more of the first through eighth aspects, process 700 includes maintaining a sliding window of frame count values to handle packet loss and wrap-around of a frame count subfield, wherein the frame count subfield wraps around when access points in a neighborhood have lost multiple frames including a frame with a certain frame count.

In a tenth aspect, alone or in combination with one or more of the first through ninth aspects, the access point credential is a temporary key that is appended to the payload to enable the device to become associated with the access point.

In an eleventh aspect, alone or in combination with one or more of the first through tenth aspects, process 700 includes stopping a maintenance of state information associated with the device after the payload and the access point credential are relayed to the cloud computing system.

In a twelfth aspect, alone or in combination with one or more of the first through eleventh aspects, associating with the device comprises receiving, from the device, an association request that indicates the device credential, and transmitting, to the device, an association response that indicates the access point credential.

In a thirteenth aspect, alone or in combination with one or more of the first through twelfth aspects, an indication of a location associated with the device is appended to the payload based at least in part on an agreement between the access point and the cloud computing system.

In a fourteenth aspect, alone or in combination with one or more of the first through thirteenth aspects, process 700 includes communicating with the cloud computing system via a proxy entity in a local area network that maintains relationships with one or more cloud computing systems when multiple access points in an area are connected to the cloud computing system via the proxy entity in the local area network, wherein the proxy entity in the local area network includes a network controller.

In a fifteenth aspect, alone or in combination with one or more of the first through fourteenth aspects, the proxy entity resides in a common entity included in a local area network, and one or more access points are connected to the common entity in the local area network on which the proxy entity resides.

In a sixteenth aspect, alone or in combination with one or more of the first through fifteenth aspects, process 700 includes transmitting, to the device, a list of addresses associated with the cloud computing system that are accessible to the device, wherein addresses not indicated in the list of addresses are not accessible to the device.

In a seventeenth aspect, alone or in combination with one or more of the first through sixteenth aspects, process 700 includes transmitting, to the device, an instruction that limits a payload size of communications between the device and the cloud computing system or a quantity of requests that are permitted to be relayed on behalf of the device from the access point to the cloud computing system over a time period, wherein the payload size and the quantity of requests are based at least in part on a local policy at the access point or based at least in part on a relationship between the access point and the cloud computing system.

In an eighteenth aspect, alone or in combination with one or more of the first through seventeenth aspects, process 700 includes transmitting, to the device, an instruction that limits a duration of an association between the device and the access point, wherein the access point is configured to disassociate with the device after a certain period of time based at least in part on the instruction from the cloud computing system.

In a nineteenth aspect, alone or in combination with one or more of the first through eighteenth aspects, process 700 includes transmitting, to the device, an instruction that limits an amount or frequency of relaying of payloads for the device while in a pre-associated state, wherein the device is in the pre-associated state prior to associating with the access point.

In a twentieth aspect, alone or in combination with one or more of the first through nineteenth aspects, the access point is co-located with an enhanced broadcast service proxy.

Although Fig. 7 shows example blocks of process 700, in some aspects, process 700 may include additional blocks, fewer blocks, different blocks, or differently arranged blocks than those depicted in Fig. 7. Additionally, or alternatively, two or more of the blocks of process 700 may be performed in parallel.

Fig. 8 is a diagram illustrating an example process 800 performed, for example, by a cloud computing system, in accordance with the present disclosure. Example process 800 is an example where the cloud computing system performs operations associated with associating devices with access points using credentials.

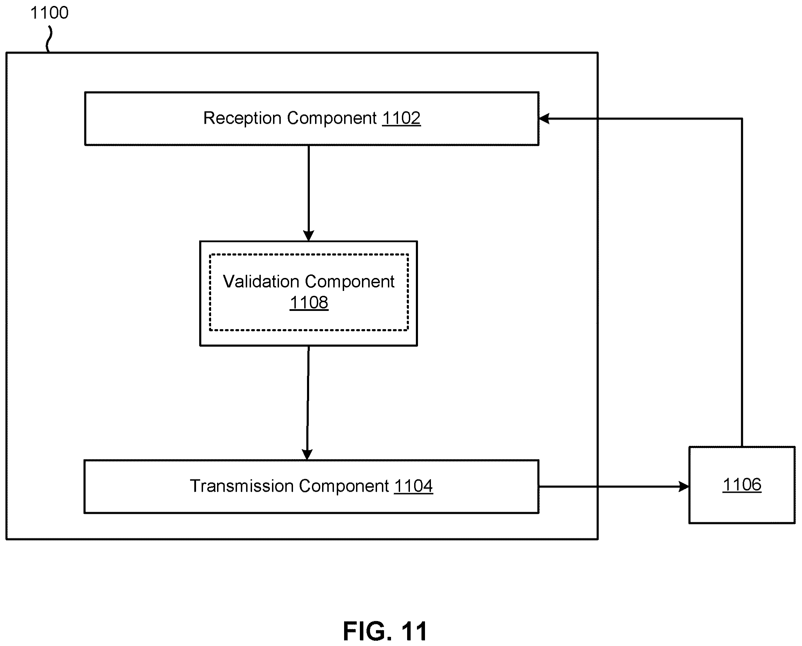

As shown in Fig. 8, in some aspects, process 800 may include receiving, from an access point, an indication of a payload associated with a device and an access point credential (block 810). For example, the cloud computing system (e.g., using reception component 1102, depicted in Fig. 11) may receive, from an access point, an indication of a payload associated with a device and an access point credential, as described above.

As further shown in Fig. 8, in some aspects, process 800 may include validating the payload and the access point credential, as indicated in the indication (block 820). For example, the cloud computing system (e.g., using validation component 1108, depicted in Fig. 11) may validate the payload and the access point credential, as indicated in the indication, as described above.

As further shown in Fig. 8, in some aspects, process 800 may include transmitting, to the access point, the payload and the access point credential based at least in part on the validation of the payload and the access point credential (block 830). For example, the cloud computing system (e.g., using transmission component 1104, depicted in Fig. 11) may transmit, to the access point, the payload and the access point credential based at least in part on the validation of the payload and the access point credential, as described above.

As further shown in Fig. 8, in some aspects, process 800 may include communicating with the device via the access point based at least in part on an association between the device and the access point, wherein the association is based at least in part on the access point credential (block 840). For example, the cloud computing system (e.g., using reception component 1102 and/or transmission component 1104, depicted in Fig. 11) may communicate with the device via the access point based at least in part on an association between the device and the access point, wherein the association is based at least in part on the access point credential, as described above.

Process 800 may include additional aspects, such as any single aspect or any combination of aspects described below and/or in connection with one or more other processes described elsewhere herein.

In a first aspect, signaling between the cloud computing system and the access point is between the cloud computing system and a proxy entity associated with the access point, wherein the proxy entity is collocated within the access point or the proxy entity in a local area network associated with the access point.

In a second aspect, alone or in combination with the first aspect, a link between the access point and the cloud computing system is secured using transport layer security or Internet Protocol security.

In a third aspect, alone or in combination with one or more of the first and second aspects, content exchanged between the access point and the cloud computing system is protected using an asymmetric key between the access point and the cloud computing system.

In a fourth aspect, alone or in combination with one or more of the first through third aspects, validating the payload comprises validating the payload based at least in part on a device credential.

In a fifth aspect, alone or in combination with one or more of the first through fourth aspects, process 800 includes verifying that the indication received from the access point is from a trusted access point based at least in part on the access point credential.

In a sixth aspect, alone or in combination with one or more of the first through fifth aspects, the payload and the access point credential that are transmitted to the access point are intended for the device.

Although Fig. 8 shows example blocks of process 800, in some aspects, process 800 may include additional blocks, fewer blocks, different blocks, or differently arranged blocks than those depicted in Fig. 8. Additionally, or alternatively, two or more of the blocks of process 800 may be performed in parallel.

Fig. 9 is a block diagram of an example apparatus 900 for wireless communication. The apparatus 900 may be a device, or a device may include the apparatus 900. In some aspects, the apparatus 900 includes a reception component 902 and a transmission component 904, which may be in communication with one another (for example, via one or more buses and/or one or more other components). As shown, the apparatus 900 may communicate with another apparatus 906 (such as a UE, a base station, or another wireless communication device) using the reception component 902 and the transmission component 904. As further shown, the apparatus 900 may include the communication manager 140. The communication manager 140 may include an association component 908, among other examples.

In some aspects, the apparatus 900 may be configured to perform one or more operations described herein in connection with Figs. 3-5. Additionally, or alternatively, the apparatus 900 may be configured to perform one or more processes described herein, such as process 600 of Fig. 6. In some aspects, the apparatus 900 and/or one or more components shown in Fig. 9 may include one or more components of the device described above in connection with Fig. 2. Additionally, or alternatively, one or more components shown in Fig. 9 may be implemented within one or more components described above in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 902 may receive communications, such as reference signals, control information, data communications, or a combination thereof, from the apparatus 906. The reception component 902 may provide received communications to one or more other components of the apparatus 900. In some aspects, the reception component 902 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 900. In some aspects, the reception component 902 may include one or more antennas, a demodulator, a MIMO detector, a receive processor, a controller/processor, a memory, or a combination thereof, of the device described above in connection with Fig. 2.

The transmission component 904 may transmit communications, such as reference signals, control information, data communications, or a combination thereof, to the apparatus 906. In some aspects, one or more other components of the apparatus 900 may generate communications and may provide the generated communications to the transmission component 904 for transmission to the apparatus 906. In some aspects, the transmission component 904 may perform signal processing on the generated communications (such as filtering, amplification, modulation, digital-to-analog conversion, multiplexing, interleaving, mapping, or encoding, among other examples), and may transmit the processed signals to the apparatus 906. In some aspects, the transmission component 904 may include one or more antennas, a modulator, a transmit MIMO processor, a transmit processor, a controller/processor, a memory, or a combination thereof, of the device described above in connection with Fig. 2. In some aspects, the transmission component 904 may be co-located with the reception component 902 in a transceiver.

The transmission component 904 may transmit, via a broadcast, a first frame that indicates a device credential and a payload. The reception component 902 may receive, from the access point, a second frame that indicates the payload and an access point credential. The association component 908 may associate with the access point based at least in part on the access point credential. The reception component 902 and/or the transmission component 904 may perform a communication, to a cloud computing system via the access point, after the device has been associated with the access point.

The number and arrangement of components shown in Fig. 9 are provided as an example. In practice, there may be additional components, fewer components, different components, or differently arranged components than those shown in Fig. 9. Furthermore, two or more components shown in Fig. 9 may be implemented within a single component, or a single component shown in Fig. 9 may be implemented as multiple, distributed components. Additionally, or alternatively, a set of (one or more) components shown in Fig. 9 may perform one or more functions described as being performed by another set of components shown in Fig. 9.

Fig. 10 is a block diagram of an example apparatus 1000 for wireless communication. The apparatus 1000 may be a access point, or a access point may include the apparatus 1000. In some aspects, the apparatus 1000 includes a reception component 1002 and a transmission component 1004, which may be in communication with one another (for example, via one or more buses and/or one or more other components). As shown, the apparatus 1000 may communicate with another apparatus 1006 (such as a UE, a base station, or another wireless communication device) using the reception component 1002 and the transmission component 1004. The apparatus 1000 may include an association component 1008, among other examples.

In some aspects, the apparatus 1000 may be configured to perform one or more operations described herein in connection with Figs. 3-5. Additionally, or alternatively, the apparatus 1000 may be configured to perform one or more processes described herein, such as process 700 of Fig. 7. In some aspects, the apparatus 1000 and/or one or more components shown in Fig. 10 may include one or more components of the access point described above in connection with Fig. 2. Additionally, or alternatively, one or more components shown in Fig. 10 may be implemented within one or more components described above in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 1002 may receive communications, such as reference signals, control information, data communications, or a combination thereof, from the apparatus 1006. The reception component 1002 may provide received communications to one or more other components of the apparatus 1000. In some aspects, the reception component 1002 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 1000. In some aspects, the reception component 1002 may include one or more antennas, a demodulator, a MIMO detector, a receive processor, a controller/processor, a memory, or a combination thereof, of the access point described above in connection with Fig. 2.

The transmission component 1004 may transmit communications, such as reference signals, control information, data communications, or a combination thereof, to the apparatus 1006. In some aspects, one or more other components of the apparatus 1000 may generate communications and may provide the generated communications to the transmission component 1004 for transmission to the apparatus 1006. In some aspects, the transmission component 1004 may perform signal processing on the generated communications (such as filtering, amplification, modulation, digital-to-analog conversion, multiplexing, interleaving, mapping, or encoding, among other examples), and may transmit the processed signals to the apparatus 1006. In some aspects, the transmission component 1004 may include one or more antennas, a modulator, a transmit MIMO processor, a transmit processor, a controller/processor, a memory, or a combination thereof, of the access point described above in connection with Fig. 2. In some aspects, the transmission component 1004 may be co-located with the reception component 1002 in a transceiver.

The reception component 1002 may receive, from a device via a broadcast, a first frame that indicates a device credential and a payload. The transmission component 1004 may relay, to a cloud computing system, the payload with an access point credential. The reception component 1002 may receive, from the cloud computing system, the payload and the access point credential based at least in part on a validation of the payload and the access point credential. The association component 1008 may associate with the device based at least in part on the access point credential to enable communications between the device and the cloud computing system via the access point.

The number and arrangement of components shown in Fig. 10 are provided as an example. In practice, there may be additional components, fewer components, different components, or differently arranged components than those shown in Fig. 10. Furthermore, two or more components shown in Fig. 10 may be implemented within a single component, or a single component shown in Fig. 10 may be implemented as multiple, distributed components. Additionally, or alternatively, a set of (one or more) components shown in Fig. 10 may perform one or more functions described as being performed by another set of components shown in Fig. 10.

Fig. 11 is a block diagram of an example apparatus 1100 for wireless communication. The apparatus 1100 may be a cloud computing system, or a cloud computing system may include the apparatus 1100. In some aspects, the apparatus 1100 includes a reception component 1102 and a transmission component 1104, which may be in communication with one another (for example, via one or more buses and/or one or more other components). As shown, the apparatus 1100 may communicate with another apparatus 1106 (such as a UE, a base station, or another wireless communication device) using the reception component 1102 and the transmission component 1104. As further shown, the apparatus 1100 may include a validation component 1108, among other examples.

In some aspects, the apparatus 1100 may be configured to perform one or more operations described herein in connection with Figs. 3-5. Additionally, or alternatively, the apparatus 1100 may be configured to perform one or more processes described herein, such as process 800 of Fig. 8. In some aspects, the apparatus 1100 and/or one or more components shown in Fig. 11 may include one or more components of the cloud computing system described above in connection with Fig. 2. Additionally, or alternatively, one or more components shown in Fig. 11 may be implemented within one or more components described above in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 1102 may receive communications, such as reference signals, control information, data communications, or a combination thereof, from the apparatus 1106. The reception component 1102 may provide received communications to one or more other components of the apparatus 1100. In some aspects, the reception component 1102 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 1100. In some aspects, the reception component 1102 may include one or more antennas, a demodulator, a MIMO detector, a receive processor, a controller/processor, a memory, or a combination thereof, of the cloud computing system described above in connection with Fig. 2.

The transmission component 1104 may transmit communications, such as reference signals, control information, data communications, or a combination thereof, to the apparatus 1106. In some aspects, one or more other components of the apparatus 1100 may generate communications and may provide the generated communications to the transmission component 1104 for transmission to the apparatus 1106. In some aspects, the transmission component 1104 may perform signal processing on the generated communications (such as filtering, amplification, modulation, digital-to-analog conversion, multiplexing, interleaving, mapping, or encoding, among other examples), and may transmit the processed signals to the apparatus 1106. In some aspects, the transmission component 1104 may include one or more antennas, a modulator, a transmit MIMO processor, a transmit processor, a controller/processor, a memory, or a combination thereof, of the cloud computing system described above in connection with Fig. 2. In some aspects, the transmission component 1104 may be co-located with the reception component 1102 in a transceiver.

The reception component 1102 may receive, from an access point, an indication of a payload associated with a device and an access point credential. The validation component 1108 may validate the payload and the access point credential, as indicated in the indication. The transmission component 1104 may transmit, to the access point, the payload and the access point credential based at least in part on the validation of the payload and the access point credential. The reception component 1102 and/or the transmission component 1104 may communicate with the device via the access point based at least in part on an association between the device and the access point, wherein the association is based at least in part on the access point credential.

The number and arrangement of components shown in Fig. 11 are provided as an example. In practice, there may be additional components, fewer components, different components, or differently arranged components than those shown in Fig. 11. Furthermore, two or more components shown in Fig. 11 may be implemented within a single component, or a single component shown in Fig. 11 may be implemented as multiple, distributed components. Additionally, or alternatively, a set of (one or more) components shown in Fig. 11 may perform one or more functions described as being performed by another set of components shown in Fig. 11.

The following provides an overview of some Aspects of the present disclosure:
Aspect 1: A method of wireless communication performed by device, comprising: transmitting, via a broadcast, a first frame that indicates one or more of a device credential or a payload; receiving, from an access point, a second frame that indicates one or more of the payload or an access point credential; associating with the access point based at least in part on the access point credential; and performing a communication, to a cloud computing system via the access point, after the device has been associated with the access point.
Aspect 2: The method of Aspect 1, further comprising: retrieving, from the second frame, the access point credential based at least in part on a cloud computing system credential, wherein content in the second frame is from the cloud computing system and is protected end-to-end.
Aspect 3: The method of Aspect 2, wherein the content in the second frame is protected end-to-end using asymmetric keys.
Aspect 4: The method of any of Aspects 1 through 3, wherein: the device credential is signed by the cloud computing system; the payload includes one or more of a device identifier, security credentials associated with the device, or service-specific information; the first frame indicates a frame signature that is associated with the first frame and is derived based at least in part on the device credential; and the first frame indicates a uniform resource identifier associated with a destination, wherein the destination is associated with the cloud computing system.
Aspect 5: The method of Aspect 4, wherein: the device credential is a device certificate that is provisioned when the device is manufactured or when a certain application is installed on the device; the payload is protected end-to-end using an asymmetric key between the device and the cloud computing system; and the security credentials associated with the device in the payload is the device credential.
Aspect 6: The method of Aspect 4, wherein the service-specific information indicates one or more of: an amount of data to upload to a server, or a desired destination associated with a user, and wherein additional information indicating a duration of a session or an amount of data permitted during the session is indicated from the cloud computing system to the access point based at least in part on the service-specific information.
Aspect 7: The method of any of Aspects 1 through 6, wherein transmitting the first frame is based at least in part on a condition being satisfied.
Aspect 8: The method of Aspect 7, wherein the condition is satisfied based at least in part on an application being launched on the device.
Aspect 9: The method of Aspect 7, wherein the condition is satisfied based at least in part on the device performing a task.
Aspect 10: The method of any of Aspects 1 through 9, wherein the first frame is transmitted in a periodic manner.
Aspect 11: The method of any of Aspects 1 through 10, wherein receiving the second frame comprises receiving the second frame via a unicast transmission.
Aspect 12: The method of any of Aspects 1 through 11, wherein receiving the second frame comprises receiving the second frame via a broadcast transmission, wherein the second frame indicates a device identifier associated with the device and the access point credential.
Aspect 13: The method of Aspect 12, wherein the second frame is a beacon frame broadcasted from the access point.
Aspect 14: The method of Aspect 12, wherein the device identifier is a media access control address associated with the device, or a hash of the media access control address associated with the device.
Aspect 15: The method of any of Aspects 1 through 14, further comprising: verifying the payload and the access point credential based at least in part on the cloud computing system credential.
Aspect 16: The method of any of Aspects 1 through 15, wherein associating with the access point comprises: transmitting, to the access point, an association request that indicates the device credential; receiving, from the access point, an association response that indicates the access point credential; and verifying the access point credential, as indicated in the association response, with the access point credential, as indicated in the second frame.
Aspect 17: The method of any of Aspects 1 through 16, wherein associating with the access point is based at least in part on a public key-based authentication.
Aspect 18: The method of any of Aspects 1 through 17, wherein the access point credential is a temporary key that is appended to the payload to enable the device to become associated with the access point.
Aspect 19: The method of any of Aspects 1 through 18, further comprising: receiving, from the access point, a list of addresses associated with the cloud computing system that are accessible to the device, wherein addresses not indicated in the list of addresses are not accessible to the device.
Aspect 20: The method of any of Aspects 1 through 19, further comprising: receiving, from the access point, an instruction that limits a payload size of communications with the cloud computing system or a quantity of requests that are permitted to be relayed on behalf of the device from the access point to the cloud computing system over a time period, wherein the payload size and the quantity of requests are based at least in part on a local policy at the access point or based at least in part on a relationship between the access point and the cloud computing system.
Aspect 21: The method of any of Aspects 1 through 20, further comprising: receiving, from the access point, an instruction that limits a duration of an association between the device and the access point, wherein the access point is configured to disassociate with the device after a certain period of time based at least in part on the instruction from the cloud computing system.
Aspect 22: The method of any of Aspects 1 through 21, further comprising: receiving, from the access point, an instruction that limits an amount or frequency of relaying of payloads for the device while in a pre-associated state, wherein the device is in the pre-associated state prior to associating with the access point.
Aspect 23: A method of wireless communication performed by an access point, comprising: receiving, from a device via a broadcast, a first frame that indicates a device credential and a payload; relaying, to a cloud computing system, the payload with an access point credential; receiving, from the cloud computing system, the payload and the access point credential based at least in part on a validation of the payload and the access point credential; and associating with the device based at least in part on the access point credential to enable communications between the device and the cloud computing system via the access point.
Aspect 24: The method of Aspect 23, wherein one or more of: evaluating criteria, maintaining or managing a relationship with the cloud computing system, appending additional information to the payload, or limiting a size of the payload relayed on behalf of the device is performed at a proxy entity associated with the access point, wherein the proxy entity is collocated within the access point or the proxy entity in a local area network associated with the access point.
Aspect 25: The method of any of Aspects 23 through 24, wherein a link between the access point and the cloud computing system is secured using transport layer security or Internet Protocol security, wherein the link is secured using the access point or using a proxy entity associated with the access point.
Aspect 26: The method of any of Aspects 23 through 25, wherein content exchanged between the access point and the cloud computing system is protected using an asymmetric key between the access point and the cloud computing system.
Aspect 27: The method of any of Aspects 23 through 26, further comprising: transmitting, to the device, a second frame that indicates the payload and the access point credential.
Aspect 28: The method of any of Aspects 23 through 27, further comprising: verifying the device credential, as indicated in the first frame, based at least in part on a cloud computing system credential that is previously installed on the access point, wherein relaying the payload with the access point credential is based at least in part on verifying the device credential.
Aspect 29: The method of any of Aspects 23 through 28, further comprising: verifying that the device is authorized to transmit the payload to the cloud computing system based at least in part on the device credential, wherein the device credential is signed by the cloud computing system, and wherein the device is verified based at least in part on the cloud computing system credential.
Aspect 30: The method of any of Aspects 23 through 29, further comprising: discarding the first frame when a device certificate subfield is present in the first frame and one or more of: a cloud computing system credential or a credentials of a central authority that signed the device credential is not installed, a verification of the device credential using an installed credential of a destination associated with the cloud computing system or the credentials of the central authority fails, or a frame signature type subfield is not associated with a higher layer authentication and a verification of a frame signature associated with the first frame using the device credential fails.
Aspect 31: The method of any of Aspects 23 through 30, further comprising: discarding the first frame when a replay protection subfield is present in the first frame and one or more of: a time subfield is set to a nonzero value and a difference between the nonzero value and a time the first frame is received satisfies a threshold value, a frame count subfield is nonzero and is less than or equal to a value in a previously received first frame, or the frame count subfield is zero and the value in the previously received first frame satisfies a threshold value.
Aspect 32: The method of any of Aspects 23 through 31, further comprising: maintaining a sliding window of frame count values to handle packet loss and wrap-around of a frame count subfield, wherein the frame count subfield wraps around when access points in a neighborhood have lost multiple frames including a frame with a certain frame count.
Aspect 33: The method of any of Aspects 23 through 32, wherein the access point credential is a temporary key that is appended to the payload to enable the device to become associated with the access point.
Aspect 34: The method of any of Aspects 23 through 33, further comprising: stopping a maintenance of state information associated with the device after the payload and the access point credential are relayed to the cloud computing system.
Aspect 35: The method of any of Aspects 23 through 34, wherein associating with the device comprises: receiving, from the device, an association request that indicates the device credential; and transmitting, to the device, an association response that indicates the access point credential.
Aspect 36: The method of any of Aspects 23 through 35, wherein an indication of a location associated with the device is appended to the payload based at least in part on an agreement between the access point and the cloud computing system.
Aspect 37: The method of any of Aspects 23 through 36, further comprising: communicating with the cloud computing system via a proxy entity in a local area network that maintains relationships with one or more cloud computing systems when multiple access points in an area are connected to the cloud computing system via the proxy entity in the local area network, wherein the proxy entity in the local area network includes a network controller.
Aspect 38: The method of Aspect 37, wherein the proxy entity resides in a common entity included in a local area network, and wherein one or more access points are connected to the common entity in the local area network on which the proxy entity resides.
Aspect 39: The method of any of Aspects 23 through 38, further comprising: transmitting, to the device, a list of addresses associated with the cloud computing system that are accessible to the device, wherein addresses not indicated in the list of addresses are not accessible to the device.
Aspect 40: The method of any of Aspects 23 through 39, further comprising: transmitting, to the device, an instruction that limits a payload size of communications between the device and the cloud computing system or a quantity of requests that are permitted to be relayed on behalf of the device from the access point to the cloud computing system over a time period, wherein the payload size and the quantity of requests are based at least in part on a local policy at the access point or based at least in part on a relationship between the access point and the cloud computing system.
Aspect 41: The method of any of Aspects 23 through 40, further comprising: transmitting, to the device, an instruction that limits a duration of an association between the device and the access point, wherein the access point is configured to disassociate with the device after a certain period of time based at least in part on the instruction from the cloud computing system.
Aspect 42: The method of any of Aspects 23 through 41, further comprising: transmitting, to the device, an instruction that limits an amount or frequency of relaying of payloads for the device while in a pre-associated state, wherein the device is in the pre-associated state prior to associating with the access point.
Aspect 43: The method of any of Aspects 23 through 42, wherein the access point is co-located with an enhanced broadcast service proxy.
Aspect 44: A method of wireless communication performed by a cloud computing system, comprising: receiving, from an access point, an indication of a payload associated with a device and an access point credential; validating the payload and the access point credential, as indicated in the indication; transmitting, to the access point, the payload and the access point credential based at least in part on the validation of the payload and the access point credential; and communicating with the device via the access point based at least in part on an association between the device and the access point, wherein the association is based at least in part on the access point credential.
Aspect 45: The method of Aspect 44, wherein signaling between the cloud computing system and the access point is between the cloud computing system and a proxy entity associated with the access point, wherein the proxy entity is collocated within the access point or the proxy entity in a local area network associated with the access point.
Aspect 46: The method of any of Aspects 44 through 45, wherein a link between the access point and the cloud computing system is secured using transport layer security or Internet Protocol security.
Aspect 47: The method of any of Aspects 44 through 46, wherein content exchanged between the access point and the cloud computing system is protected using an asymmetric key between the access point and the cloud computing system.
Aspect 48: The method of any of Aspects 44 through 47, wherein validating the payload comprises validating the payload based at least in part on a device credential.
Aspect 49: The method of any of Aspects 44 through 48, further comprising verifying that the indication received from the access point is from a trusted access point based at least in part on the access point credential.
Aspect 50: The method of any of Aspects 44 through 49, wherein the payload and the access point credential that are transmitted to the access point are intended for the device.
Aspect 51: An apparatus for wireless communication at a device, comprising a processor; memory coupled with the processor; and instructions stored in the memory and executable by the processor to cause the apparatus to perform the method of one or more of Aspects 1-22.
Aspect 52: A device for wireless communication, comprising a memory and one or more processors coupled to the memory, the one or more processors configured to perform the method of one or more of Aspects 1-22.
Aspect 53: An apparatus for wireless communication, comprising at least one means for performing the method of one or more of Aspects 1-22.
Aspect 54: A non-transitory computer-readable medium storing code for wireless communication, the code comprising instructions executable by a processor to perform the method of one or more of Aspects 1-22.
Aspect 55: A non-transitory computer-readable medium storing a set of instructions for wireless communication, the set of instructions comprising one or more instructions that, when executed by one or more processors of a device, cause the device to perform the method of one or more of Aspects 1-22.
Aspect 56: An apparatus for wireless communication at a device, comprising a processor; memory coupled with the processor; and instructions stored in the memory and executable by the processor to cause the apparatus to perform the method of one or more of Aspects 23-43.
Aspect 57: A device for wireless communication, comprising a memory and one or more processors coupled to the memory, the one or more processors configured to perform the method of one or more of Aspects 23-43.
Aspect 58: An apparatus for wireless communication, comprising at least one means for performing the method of one or more of Aspects 23-43.
Aspect 59: A non-transitory computer-readable medium storing code for wireless communication, the code comprising instructions executable by a processor to perform the method of one or more of Aspects 23-43.
Aspect 60: A non-transitory computer-readable medium storing a set of instructions for wireless communication, the set of instructions comprising one or more instructions that, when executed by one or more processors of a device, cause the device to perform the method of one or more of Aspects 23-43.
Aspect 61: An apparatus for wireless communication at a device, comprising a processor; memory coupled with the processor; and instructions stored in the memory and executable by the processor to cause the apparatus to perform the method of one or more of Aspects 44-50.
Aspect 62: A device for wireless communication, comprising a memory and one or more processors coupled to the memory, the one or more processors configured to perform the method of one or more of Aspects 44-50.
Aspect 63: An apparatus for wireless communication, comprising at least one means for performing the method of one or more of Aspects 44-50.
Aspect 64: A non-transitory computer-readable medium storing code for wireless communication, the code comprising instructions executable by a processor to perform the method of one or more of Aspects 44-50.
Aspect 65: A non-transitory computer-readable medium storing a set of instructions for wireless communication, the set of instructions comprising one or more instructions that, when executed by one or more processors of a device, cause the device to perform the method of one or more of Aspects 44-50.

The foregoing disclosure provides illustration and description, but is not intended to be exhaustive or to limit the aspects to the precise forms disclosed. Modifications and variations may be made in light of the above disclosure or may be acquired from practice of the aspects.

As used herein, the term "component" is intended to be broadly construed as hardware and/or a combination of hardware and software. "Software" shall be construed broadly to mean instructions, instruction sets, code, code segments, program code, programs, subprograms, software modules, applications, software applications, software packages, routines, subroutines, objects, executables, threads of execution, procedures, and/or functions, among other examples, whether referred to as software, firmware, middleware, microcode, hardware description language, or otherwise. As used herein, a "processor" is implemented in hardware and/or a combination of hardware and software. It will be apparent that systems and/or methods described herein may be implemented in different forms of hardware and/or a combination of hardware and software. The actual specialized control hardware or software code used to implement these systems and/or methods is not limiting of the aspects. Thus, the operation and behavior of the systems and/or methods are described herein without reference to specific software code, since those skilled in the art will understand that software and hardware can be designed to implement the systems and/or methods based, at least in part, on the description herein.

As used herein, "satisfying a threshold" may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various aspects. Many of these features may be combined in ways not specifically recited in the claims and/or disclosed in the specification. The disclosure of various aspects includes each dependent claim in combination with every other claim in the claim set. As used herein, a phrase referring to "at least one of" a list of items refers to any combination of those items, including single members. As an example, "at least one of: a, b, or c" is intended to cover a, b, c, a + b, a + c, b + c, and a + b + c, as well as any combination with multiples of the same element (e.g., a + a, a + a + a, a + a + b, a + a + c, a + b + b, a + c + c, b + b, b + b + b, b + b + c, c + c, and c + c + c, or any other ordering of a, b, and c).

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the terms "set" and "group" are intended to include one or more items and may be used interchangeably with "one or more." Where only one item is intended, the phrase "only one" or similar language is used. Also, as used herein, the terms "has," "have," "having," or the like are intended to be open-ended terms that do not limit an element that they modify (e.g., an element "having" A may also have B). Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. An apparatus of a device (900) for wireless communication, comprising:
means for transmitting, via a broadcast, a first frame that indicates one or more of a device credential or a first payload;
means for receiving, from an access point (1000), a second frame that indicates one or more of a second payload or an access point credential;
means for associating with the access point (1000) based at least in part on the access point credential; and
means for performing a communication, to a cloud computing system (1100) via the access point (1000), after the device (900) has been associated with the access point (1000).

2. The apparatus of claim 1, further comprising:
means for retrieving, from the second frame, the access point credential based at least in part on a cloud computing system credential, wherein content in the second frame is from the cloud computing system (1100) and is protected end-to-end, and wherein the content in the second frame is protected end-to-end using asymmetric keys.

3. The apparatus of claim 1, wherein:
the device credential is signed by the cloud computing system (1100);
the payload includes one or more of a device identifier, security credentials associated with the device (900), or service-specific information; and
the first frame indicates one or more of: a frame signature that is associated with the first frame and is derived based at least in part on the device credential, or a uniform resource identifier associated with a destination, wherein the destination is associated with the cloud computing system (1100).

4. The apparatus of claim 1, further comprising:
means for transmitting the first frame based at least in part on a condition being satisfied, wherein the condition is satisfied based at least in part on an application being launched on the device (900), and wherein the condition is satisfied based at least in part on the device (900) performing a task.

5. The apparatus of claim 1, further comprising:
means for transmit the first frame in a periodic manner.

6. The apparatus of claim 1, further comprising:
means for receiving the second frame via a unicast transmission; or
means for receiving the second frame via a broadcast transmission, wherein the second frame indicates a device identifier associated with the device (900) and the access point credential.

7. The apparatus of claim 1, further comprising
means for verifying the payload and the access point credential based at least in part on the cloud computing system credential.

8. The apparatus of claim 1, wherein the means for associating with the access point (1000) comprises:
means for transmitting, to the access point (1000), an association request that indicates the device credential;
means for receiving, from the access point (1000), an association response that indicates the access point credential; and
means for verifying the access point credential, as indicated in the association response, with the access point credential, as indicated in the second frame.

9. The apparatus of claim 1, further comprising:
means for associating with the access point (1000) based at least in part on a public key-based authentication.

10. The apparatus of claim 1, wherein the access point credential is a temporary key that is appended to the payload to enable the device (900) to become associated with the access point (1000).

11. The apparatus of claim 1, further comprising:
means for receiving, from the access point (1000), a list of addresses associated with the cloud computing system (1100) that are accessible to the device (900), wherein addresses not indicated in the list of addresses are not accessible to the device (900).

12. The apparatus of claim 1, further comprising:
means for receiving, from the access point (1000), an instruction that limits a payload size of communications with the cloud computing system (1100) or a quantity of requests that are permitted to be relayed on behalf of the device (900) from the access point (1000) to the cloud computing system (1100) over a time period, wherein the payload size and the quantity of requests are based at least in part on a local policy at the access point (1000) or based at least in part on a relationship between the access point (1000) and the cloud computing system (1100).

13. The apparatus of claim 1, further comprising:
means for receiving, from the access point (1000), an instruction that limits a duration of an association between the device (900) and the access point (1000), wherein the access point (1000) is configured to disassociate with the device (900) after a certain period of time based at least in part on the instruction from the cloud computing system (1100); or
means for receiving, from the access point (1000), an instruction that limits an amount or frequency of relaying of payloads for the device (900) while in a pre-associated state, wherein the device (900) is in the pre-associated state prior to associating with the access point (1000).

14. An apparatus of an access point (1000) for wireless communication, comprising:
means for receiving, from a device (900) via a broadcast, a first frame that indicates a device credential and a payload;
means for relaying, to a cloud computing system (1100), the payload with an access point credential;
means for receiving, from the cloud computing system (1100), the payload and the access point credential based at least in part on a validation of the payload and the access point credential; and
means for associating with the device (900) based at least in part on the access point credential to enable communications between the device (900) and the cloud computing system (1100) via the access point (1000).

15. An apparatus of a cloud computing system (1100) for wireless communication,
means for receiving, from an access point (1000), at least one of an indication of a first payload associated with a device (900) and an access point credential;
means for validating the first payload and the access point credential, as indicated in the indication;
means for transmitting, to the access point (1000), at least one of a second payload and the access point credential based at least in part on the validation of the first payload and the access point credential.
